(19) Europäisches Patentamt
European Patent Office
Office européen des brevets

(11) EP 4 148 637 A1

(12) **EUROPEAN PATENT APPLICATION**

(43) Date of publication:
**15.03.2023 Bulletin 2023/11**

(21) Application number: **22159942.6**

(22) Date of filing: **03.03.2022**

(51) International Patent Classification (IPC):
***G06Q 10/06*** *(2012.01)*

(52) Cooperative Patent Classification (CPC):
**G06Q 10/0631**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021 JP 2021147034**

(71) Applicants:
- **KABUSHIKI KAISHA TOSHIBA**
**Minato-ku**
**Tokyo**
**105-0023 (JP)**
- **Toshiba Infrastructure Systems & Solutions Corporation**
**Kawasaki-shi, Kanagawa 212-0013 (JP)**

(72) Inventors:
- **Aisu, Hideyuki**
**Minato-ku, Tokyo, 105-0023 (JP)**
- **Yamaguchi, Daisuke**
**Minato-ku, Tokyo, 105-0023 (JP)**
- **Ikeda, Katsumi**
**Kawasaki-shi, Kanagawa, 212-0013 (JP)**

(74) Representative: **Hoffmann Eitle**
**Patent- und Rechtsanwälte PartmbB**
**Arabellastraße 30**
**81925 München (DE)**

# (54) INFORMATION PROCESSING APPARATUS, INFORMATION PROCESSING METHOD, AND COMPUTER PROGRAM

(57) An information processing apparatus includes: a user interface that causes a user to check a constraint violation of a candidate plan of work to be performed by a plurality of workers; and an updater that updates constraint information including a first constraint condition related to the work based on the constraint violation of the candidate plan.

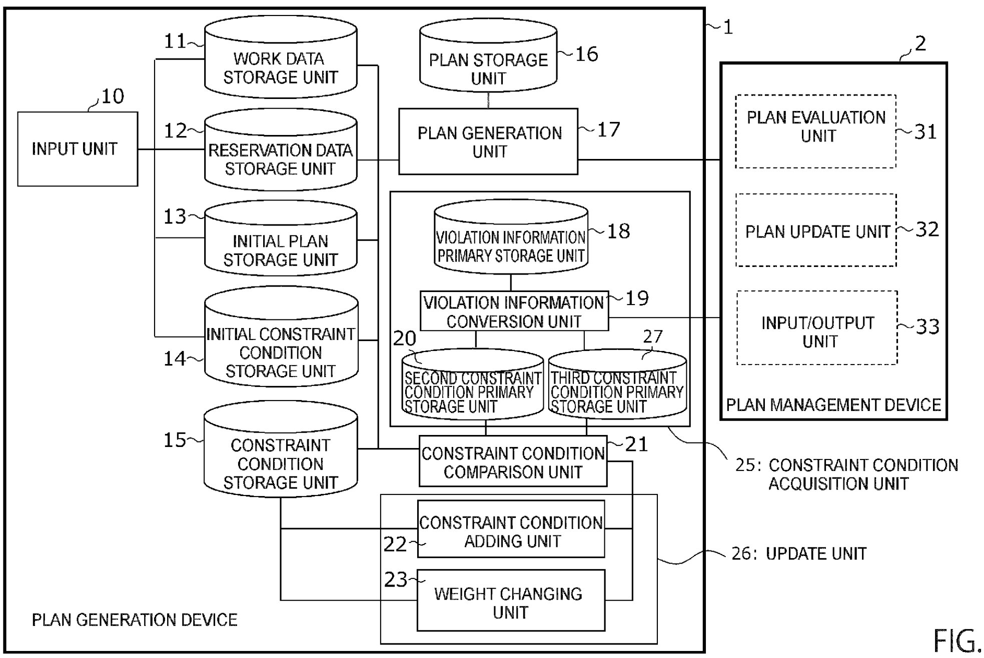


FIG. 1

EP 4 148 637 A1

## Description

### FIELD

An example of the present disclosure relates to an information processing apparatus, an information processing method, and a computer program.

### BACKGROUND

A plan for allocating work to each worker so as to satisfy a wide variety of constraint conditions on the site is referred to as a work plan or shift scheduling. Against the background of an increase in non-regular employees, there is an increasing need for automation of work plans (shift scheduling) targeting human resources in various fields such as transportation, manufacturing, medical care, nursing care, stores, and education. For example, an example thereof in the transportation field such as railway and public transportation includes a crew plan. The crew plan is a work of dropping an anonymous basic plan called a so-called alternating plan into a specific work plan (shift scheduling) so as to satisfy individual conditions (annual holidays, qualification, etc.) of each crew member.

In a work plan targeting human resources, there are so many constraint conditions (hereinafter, it is referred to as a soft constraint condition), that is, "please comply as much as possible", corresponding to on-site know-how. In the soft constraint condition, a case where it is required to simultaneously satisfy the soft constraint conditions that causes mutual contradiction or a case where there is no solution that satisfies all the soft constraint conditions frequently occurs.

As a representative example of a general solution of scheduling in a case where such a software constraint condition is set, a method as described in Non-Patent Literature 1 is known. First, for each software constraint condition, a penalty calculation formula according to the degree of violation of the constraint condition and a weight according to the degree of importance of each constraint condition are defined. Then, the planning problem is expressed in the form of a weighted constraint satisfaction problem that minimizes the weighted sum of penalties. This planning problem is solved as a combinatorial optimization problem.

In these methods, it is very difficult to tune the priority of each constraint condition and the weight of each constraint condition as well-balanced values in advance. In addition, since there is a unique constraint condition for each workplace even in the same company, it is difficult to acquire the condition without omission and reflect the condition as the constraint condition. In addition, since the work rules are often changed (that is, the constraint conditions are changed) irregularly after the operation is started, it is also difficult to maintain the parameter setting data of the plan module for performing plan generation. For this reason, tuning of the priority and the weight conventionally relies on manual work.

As one of techniques for solving such a problem, there is a technique in the classical artificial intelligence field called a so-called case base. In this method, past case data similar to the input data is found, and the found case data is used for selecting a constraint condition to be used for a target and generating a plan. As another technique, there is a method of accumulating past plan cases serving as a teacher and learning a constraint condition and a weight of the constraint condition such that a feature amount of an automatically proposed plan approaches a feature amount of teacher data. However, in the case based method and the method of learning constraint conditions and weights from past plan cases described above, it is necessary to prepare a large amount of case data of a correct plan created by a skilled person, and there is a high barrier to practical use.

### BRIEF DESCRIPTION OF THE DRAWINGS

FIG. 1 is a block diagram illustrating a planning system according to an example of the present disclosure.
FIG. 2 is a diagram illustrating an example of a work plan of a crew.
FIG. 3 is a diagram illustrating a specific example of definition data of a path.
FIG. 4 is a diagram illustrating allocation of work for each day of a plurality of workers.
FIG. 5 is a diagram illustrating an example in which there are two options of a queue of work conditions and a queue of pieces of work as types of constraints, and the queue of pieces of work is selected.
FIG. 6 is a diagram illustrating an example in which there are three options of a driving qualification, a work qualification, and a driving experience as types of constraints, and the driving qualification is selected.
FIG. 7 is a diagram illustrating an example in which there are four options of a total sum of duty hours (upper limit), a total sum of duty hours (lower limit), the count of public holidays (lower limit), and the count of midnight shifts (upper limit) as types of constraints, and the total sum of duty hours (upper limit) is selected.
FIG. 8 is a diagram illustrating an example in which works that violate three types of constraints illustrated in FIGS.

5 to 7 are collectively colored and displayed.

FIG. 9 is a diagram illustrating an example in which the work (path) of the colored location is exchanged with the unallocated work (path).

FIG. 10 is a diagram illustrating an example of exchanging works (paths) of colored locations.

FIG. 11 is a diagram illustrating an example of exchanging for an unallocated path.

FIG. 12 is a diagram illustrating an example of exchanging works of different workers.

FIG. 13A is a diagram illustrating an example in which an initial value of a weight of a new constraint is set when a plurality of tasks is replaced.

FIG. 13B is a diagram illustrating an example of collectively correcting weights of learned constraints when a plurality of work is replaced.

FIG. 14A is a diagram illustrating an example of a candidate plan provided from a plan generation device 1 to a plan management device 2.

FIG. 14B is a diagram illustrating a location detected by the plan evaluation unit 31 as violating the constraint of type A.

FIG. 15 is a diagram illustrating an update example of the first constraint condition list.

FIG. 16A is a diagram illustrating an example of a candidate plan provided from the plan generation device 1 to the plan management device 2.

FIG. 16B is a diagram illustrating a location detected by a plan evaluation unit 31 as violating the constraint of type B in the candidate plan of FIG. 16A.

FIG. 17 is a diagram illustrating an update example of the first constraint condition list.

FIG. 18A is a diagram illustrating an example of a candidate plan provided from the plan generation device 1 to the plan management device 2.

FIG. 18B is a diagram illustrating a location detected by the plan evaluation unit 31 as violating the constraint of type C in the candidate plan of FIG. 18A.

FIG. 19 is a diagram illustrating an update example of the first constraint condition list.

FIG. 20A is a diagram illustrating an example of a candidate plan provided from the plan generation device 1 to the plan management device 2.

FIG. 20B is a diagram illustrating a location detected by the plan evaluation unit 31 as violating the constraint of type D in the candidate plan of FIG. 20A.

FIG. 21 is a diagram illustrating an update example of the first constraint condition list.

FIG. 22 is a flowchart of an example of a process of the planning system according to the present example.

FIG. 23 is a diagram illustrating a hardware configuration of the plan generation device 1 or the plan management device 2 of FIG. 1.

## DETAILED DESCRIPTION

In order to solve the above problem, according to an example of the present disclosure, there is provided an information processing apparatus including a user interface unit that causes a user to check a constraint violation of a candidate plan of work to be performed by a plurality of workers; and an update unit that updates constraint information including a first constraint condition related to the work based on the constraint violation of the candidate plan.

Hereinafter, examples of an information processing apparatus, an information processing method, and a program will be described with reference to the drawings. Although main components of the information processing apparatus will be mainly described below, the information processing apparatus may include components and functions that are not illustrated or described. The following description does not exclude components and functions that are not illustrated or described.

Hereinafter, examples of the present disclosure will be described with reference to the drawings.

FIG. 1 is a block diagram illustrating a planning system according to an example of the present disclosure. The planning system in FIG. 1 includes a plan generation device 1, and a plan management device 2 that are a form of an information processing apparatus according to the present example.

The outline of the planning system in FIG. 1 will be described. The plan generation device 1 generates a candidate plan of work to be performed by the worker based on constraint information including at least one constraint condition (first constraint condition) related to work to be allocated to the worker. The generated candidate plan is provided to the plan management device 2. The plan management device 2 determines whether there is a constraint violation in the candidate plan, and feeds back constraint violation information including the content of the constraint violation to the plan generation device 1 when there is the constraint violation. The plan generation device 1 converts the constraint violation information fed back from the plan management device 2 into a constraint condition that can be interpreted by the planning system, and updates the above-described constraint information based on the converted constraint condition (learning of the constraint condition). The plan generation device 1 generates a final work plan by repeating generation of a candidate plan and update of constraint information (learning of constraint conditions). As a result, it is possible to realize a general-purpose system that easily generates a plan that satisfies the constraints in the site as much as possible even when there are changes, additions, deletions, and the like of the constraints in the site, and there are various constraints in the site. Hereinafter, the planning system of FIG. 1 will be described in detail.

The plan generation device 1 includes an input unit 10, a work data storage unit 11, a reservation data storage unit 12, an initial plan storage unit 13, an initial constraint condition storage unit 14, a constraint condition storage unit (first storage unit) 15, a plan storage unit 16, a plan generation unit 17, a constraint condition acquisition unit 25, a constraint condition comparison unit 21, and an update unit 26. The constraint condition acquisition unit 25 includes a violation information primary storage unit 18, a violation information conversion unit 19, a second constraint condition primary storage unit (second storage unit) 20, and a third constraint condition primary storage unit (third storage unit) 27. The update unit 26 includes a constraint condition adding unit 22 and a weight changing unit 23.

The plan generation unit 17 generates a candidate plan by allocating work for one day or a plurality of days (time zones) to at least one worker (staff member) based on the data stored in the work data storage unit 11, the reservation data storage unit 12, the initial plan storage unit 13, the initial constraint condition storage unit 14, and the constraint condition storage unit 15. As an example of the plan to be generated, there is a work plan of a train crew described above.

FIG. 2 illustrates an example of the work plan of the crew. As a work plan, work is allocated to each day (time zone) for each crew member. Here, the "path" indicates a service of one shift on the date, and corresponds to work to be allocated to the worker. An "annual holiday" indicates a paid holiday, and a "holiday" indicates a regular holiday. There may be other types of holidays such as a "public holiday" and a "special holiday".

The definition data of each work stored in the work data storage unit 11 includes attribute information including ID information that can uniquely identify the work. FIG. 3 illustrates a specific example of the definition data of a path. Items indicating values of a plurality of attributes such as a holiday handling, a work type, a duty hour, a work start time, a work end time, a break time, a vehicle type of a train to get aboard on, and a transit section of a train are included. "Holiday handling: NO" indicates that it is not a holiday for a crew member. The illustrated set of attributes is an example, and other attribute information may be included, or part of the attribute information illustrated in FIG. 3 may not exist. The paths with the same number (ID) among the plurality of paths illustrated in FIG. 2 mean that the values of the respective items in FIG. 3 are the same.

The plan to be generated in the present example is not particularly limited the work plan of the crew as long as a set of work that is required to be processed for each day (each time zone) is given, and the plan is generated by so-called shift scheduling in which work is allocated to each worker. For example, in the field of manufacturing planning and building construction, workers may be allocated to work to be processed in respective time zones. In addition, the plan may be such that in the fields of medical care and nursing care, work (check, treatment to patient, etc.) to be processed for each time zone is determined in advance, and each work is allocated to each worker according to the qualification of each worker and the work schedule. In addition, the plan may be such that there is a plurality of types of work in a store and workers are allocated to respective types of work. Furthermore, the plan may be such that in the education field, teachers who are available for respective time zones (time schedule) are allocated. The type of attribute information varies depending on the type of work for which a plan is to be generated.

The input unit 10 is an input device that inputs data to be stored in at least one of the storage units 11 to 15. As an example, the input unit 10 may be a device operated by a user of the present system, for example, a mouse, a keyboard, or a touch panel. Alternatively, the input unit 10 may be a device to which the user inputs information by voice, gesture, or the like. Alternatively, the input unit 10 may be a communication device that receives data from an external device (Server, terminal, storage, or the like) via a wired or wireless communication network not illustrated and inputs the received data to at least one of the storage units 11 to 15.

The work data storage unit 11 stores work data including work to be processed for each day (each time zone). The work data storage unit 11 includes, for example, a database (DB), a list, or the like. The work data storage unit 11 stores a plurality of work sets that is required to be handled for respective days (respective time zones) of a period for which a plan is to be generated. The work data storage unit 11 stores definition data of each work. For respective time zones of a period for which a plan is to be generated, it is necessary to allocate workers (a crew in the case of a railroad) to all pieces of work that are required to be handled.

The reservation data storage unit 12 stores reservation data including work and holidays allocated to respective workers in advance. The reservation data storage unit 12 includes, for example, a database (DB), a list, or the like. When generating a plan, it is necessary to keep the allocation indicated in the reservation data. Note that it is also possible to generate a plan without using reservation data. In this case, the reservation data storage unit 12 is unnecessary.

The initial plan storage unit 13 stores an initial plan in which workers are allocated to all pieces of work that are required to be handled for respective time zones of a period for which a plan is to be generated. The initial plan storage unit 13 includes, for example, a database (DB), a list, or the like. The initial plan may be a plan manually generated by the user, a plan in which work is randomly allocated to respective workers, or a plan generated otherwise. It is also possible to generate a plan on a zero basis without using an initial plan.

The initial constraint condition storage unit 14 stores predetermined constraint conditions (initial constraint conditions) related to work to be allocated to workers (a crew or the like). The initial constraint condition storage unit 14 includes, for example, a database (DB), a list, or the like. A weight is set to each constraint condition. As a simple example of the constraint condition, there is a constraint condition that allocation of a path to a crew member on a holiday such as "annual holiday" or "holiday" is prohibited. There are various types of constraint conditions. Details of the constraint condition will be described later.

The constraint condition storage unit (first storage unit) 15 stores the constraint condition (first constraint condition) learned by the present system. As an example, the constraint condition storage unit 15 includes a database (DB), a list, or the like. In the initial state, the constraint condition may not be stored in the constraint condition storage unit 15 yet. A weight is set in the constraint condition. The list storing the constraint conditions stored in the constraint condition storage unit 15 is referred to as a first constraint condition list.

The set of constraint conditions stored in the constraint condition storage unit 15 corresponds to the first constraint condition. The constraint information may be defined to include the initial constraint condition stored in the initial constraint condition storage unit 14.

Based on the data stored in the work data storage unit 11, the reservation data storage unit 12, and the initial plan storage unit 13 and the constraint conditions stored in the initial constraint condition storage unit 14 and the constraint condition storage unit 15, the plan generation unit 17 generates a candidate plan in which work (such as a path) to be handled in respective days (respective time zones) is allocated to a plurality of workers. The plan generation unit 17 stores the generated candidate plan in the plan storage unit 16. In addition, the plan generation unit 17 provides the generated candidate plan to the plan management device 2.

In order to create an algorithm by which the plan generation unit 17 generates a plan, a known method capable of handling the above-described soft constraint conditions is used. Hereinafter, an example of the definition as the optimization problem will be described. A penalty corresponding to the degree of violation of the constraint condition and a weight corresponding to the degree of importance of the constraint condition are defined according to the type of each constraint condition stored in the storage units 14 and 15. A problem is defined as a weighted constraint satisfaction problem that the weighted sum of penalties is minimized, and this problem is solved as a combinatorial optimization problem. As a solution to the combinatorial optimization problem, there is a construction method, a sequential improvement method, or the like. The construction method is a method of sequentially allocating work (paths) satisfying the constraint. The sequential method is a method in which a plan is finely modified sequentially and internal evaluation is repeated (steepest descent, tabu search, genetic algorithm, simulated annealing, etc.). There are various other solutions, but the solution is not particularly limited herein.

A specific example of the solution in the present example will be described. Symbols are defined as follows.

Ck: Constraint condition
$p_k(x)$: Penalty according to degree of violation of k-th constraint condition (0 when constraint condition is satisfied)
$W_k$: Weight according to degree of importance of constraint condition (>=0)
x: Variable, $x = (x_{1,m1,j1},..., x_{d,m,j,...}, x_{D,M,J})$ ($\forall d \in D$, $\forall j \in J(d)$),$x_{d,m,j} \in \{0,1\}$ D: set of days (time zones)
M: set of workers
J: Set of work to be allocated (path, etc.)
J(d): Set (cJ) of work to be allocated for a day (time zone) $d \in D$. The work J(d) to be allocated is different for each d.
p(x): weighted sum of penalties, $P(x) = \Sigma w_k p_k(x)$

The variable $x_{d,m,j}$ has a value of 0 or 1. In a case where work $j \in J(d)$ of a day (time zone) deD is allocated to a worker meM, the variable $x_{d,m,j} = 1$, and otherwise, the variable $x_{d,m,j} = 0$.

P(x) is set as an objective function, and a problem of minimizing the objective function is defined as follows.

$$\mathit{Minimize} \quad P(x) = \sum_k W_k p_k(x) \qquad (1)$$

A basic constraint condition for solving the problem of minimizing the objective function P(x) is shown below.

$$\Sigma_{m \in M} x_{dmj} = 1 (\forall d \in D, \forall j \in J(d)) \qquad (2)$$

$$\Sigma_{j \in J(d)} x_{dmj} \leq 1 (\forall d \in, \forall m \in M) \qquad (3)$$

$$x_{dmj} = 1(\forall(d,m,j) \in C_1)$$

$$x_{dmj} = 0(\forall(d,m,j) \in C_2) \quad (4)$$

Expression (2) is a constraint that the work to be allocated for each day (each time zone) is necessarily allocated to any one of the workers.

Expression (3) is a constraint that any worker is allocated one work for one day (time zone) or allocated nothing (there may be a day (time zone) when there is no work).

Expression (4) defines a set $C1 \subseteq D \times M \times J$ representing work that is necessarily allocated to a certain worker on a certain day (time zone), and a set $C2 \subseteq D \times M \times J$ representing work that must not be allocated to a certain worker on a certain day (time zone), and sets C1 and C2 as constraints. Only one of the set C1 and the set C2 may be defined.

The variable $x_{d,m,j}$ is obtained by minimizing or quasi-minimizing the objective function P(x) under the basic constraint conditions of Expressions (1) to (4). As a result, the work for respective days (respective time zones) is allocated to the plurality of workers. When the objective function is solved, the process is started from the initial plan to correct the initial plan, so that it is possible to perform an efficient search. However, it is also possible to create a plan on a zero basis without initial plan. In this case, the initial plan storage unit 13 is unnecessary. When the search has a time limit, starting from the initial plan can increase the possibility of achieving minimization or semi-minimization within the time limit.

The initial constraint condition and the constraint condition (learned constraint condition) included in the first constraint condition list are reflected in the objective function P(x). Every time a constraint condition is added to the first constraint condition list, optimization is performed so as to minimize or quasi-minimize the objective function P(x) reflecting the added constraint condition. Details of the penalty (also referred to as a penalty function) $p_k(x)$ included in the objective function will be described later.

The plan management device 2 includes a plan evaluation unit 31, a plan update unit 32, and an input/output unit (user interface unit) 33. An input/output unit 33 includes an input device (operation device) operated by the user of the present system and an output device that presents information to the user of the present system. An example of the input device is similar to the input unit 10 of the plan generation device 1. The output device is, for example, a display device such as a liquid crystal display device, an organic EL display device, a plasma display device, or a CRT display device. Alternatively, the output device may be a virtual reality (VR) head mount, augmented reality (AR) glasses, or the like. The input/output unit 33 causes the user to check the constraint violation of the candidate plan. The input/output unit 33 outputs constraint violation information including at least one of the worker and the date and time when the constraint violation of the candidate plan has occurred and the type of constraint that has been violated.

The plan evaluation unit 31 checks whether there is a constraint violation for the candidate plan provided from the plan generation unit 17 (constraint violation check). The plan update unit 32 has a user interface function for a user to partially correct a given candidate plan by an operation such as work exchange between workers.

As a first method of the constraint violation check, there is a method of checking whether various constraints given in advance are satisfied by execution of a computer program. That is, the plan evaluation unit 31 has a function of checking whether the constraint is satisfied. In this case, the plan evaluation unit 31 may be caused to execute a program for determining whether each constraint rule is satisfied based on a plurality of rules (constraint rules) including the content of the constraint. The user may set the constraint rule in the storage device using the input/output unit 33 and read the set constraint rule. The plan evaluation unit 31 identifies a constraint that the candidate plan violates (does not satisfy) as constraint violation information, and provides (feeds back) it to the plan generation device 1.

As a second method of the constraint violation check, the user may check the candidate plan with a display device or the like, detect whether there is a location that does not satisfy the constraint, and input the constraint that the detected location does not satisfy as the constraint violation information using the input/output unit 33. In this case, the plan evaluation unit 31 provides (feeds back) the constraint violation information input by the user to the plan generation device 1.

Hereinafter, the second method of the constraint violation check will be described in detail using a specific example. FIGS. 4 to 11 are diagrams illustrating screen display examples of the display device provided in the input/output unit 33. FIGS. 4 to 11 are diagrams illustrating allocation of daily work to workers A to L. The work in FIGS. 4 to 11 is, for example, a path of a train which each worker (specifically, each crew member) gets aboard. Numerical values in FIGS. 4 to 11 are identification information about work (a path).

First, as in the example of the screen of FIG. 4, attention of the user is attracted by a method such as coloring the work (for example, the path) that violates the already learned constraint condition (constraint condition already added to the constraint condition storage unit 15) in the candidate plan. In FIG. 4, a location (work) to be colored is displayed in gray for convenience.

Next, as in the examples of the screens of FIGS. 5 to 7, options of the type (kind) of the constraint are narrowed down and displayed according to the type and the number of pieces of work selected by the user. By the user designating any constraint type from these options, the constraint violation check can be performed with the minimum operation.

FIG. 5 illustrates an example in which there are two options of a queue of work conditions and a queue of pieces of work as types of constraints, and the queue of pieces of work is selected. In the example of FIG. 5, a location selected by the user as the constraint violation because a queue of pieces of work is prohibited is colored and displayed.

FIG. 6 illustrates an example in which there are three options of driving qualification, work qualification, and driving experience as types of constraints, and the driving qualification is selected. In the example of FIG. 6, a location selected by the user as a constraint violation because driving qualification is prohibited is colored and displayed.

FIG. 7 illustrates an example in which there are four options of a total sum of duty hours (upper limit), a total sum of duty hours (lower limit), the count of public holidays (lower limit), and the count of midnight shifts (upper limit) as types of constraints, and the total sum of duty hours (upper limit) is selected. In the example of FIG. 7, the user selects all of the candidate plans of a worker whose total sum of duty hours exceeds the upper limit as a constraint violation, and the selected locations are colored and displayed.

FIG. 8 illustrates an example in which works that violate the three types of constraints illustrated in FIGS. 5 to 7 are collectively colored and displayed. As illustrated in FIG. 8, works that violate a plurality of types of constraints may be collectively displayed on the same screen, or as illustrated in FIGS. 5 to 7, works that violate respective types of constraints may be displayed on different screens.

In addition to the process of checking the constraint violation, the user may perform an operation of exchanging the work at the constraint violation location illustrated in FIGS. 5 to 8 with another work to correct the candidate plan and resolve the constraint violation.

FIG. 9 is a diagram illustrating an example in which work (a path) at a constraint violation location is replaced with unallocated work (a path). In FIG. 9, a list of pieces of unallocated work (paths) on the date (11/5) exchangeable with the path 30 is displayed, and one of pieces of work (paths) is selected from the list. Specifically, FIG. 9 illustrates an example in which the path 30 is replaced with the path 47 in the list.

FIG. 10 is a diagram illustrating an example of resolving the constraint violation by exchanging the work (paths) of the colored location. FIG. 10 illustrates an example in which the path 15 of the worker B and the path 30 of the worker L are exchanged.

The plan generation device 1 according to the present example performs the constraint violation check by the first method and the second method described above, or performs the constraint violation check by only the second method.

Some or all of the following four types are included as types of constraints to be checked in the constraint violation check. The plan management device 2 provides (feeds back), as the constraint violation information, information about the type of the constraint that is violated and the violation location (combination of the date (time frame) of the violation and the worker) to the plan generation device 1. In addition, after the user updates the candidate plan by exchanging the allocation of the plurality of pieces of work, the user also performs the constraint violation check on the updated plan in addition to the constraint violation information before the update, and in a case where a new constraint violation occurs, information about the type of the constraint that has been violated and the violation location (combination of the date (time frame) of the violation and the worker) is provided (fed back) to the plan generation device 1 as the constraint violation information.

(A) Constraint prohibiting a specific queue of pieces of work allocated to the same worker
(B) Constraint prohibiting combination of worker qualification/experience with the specific attribute of work
(C) Constraint defining at least one of an upper limit and a lower limit of a sum within a period of a specific attribute value of work allocated to the same worker
(D) Constraint prohibiting a specific queue of work attributes allocated to the same worker

The constraint of the type A is a constraint on the queue of a plurality of pieces of work (including holidays and the like) allocated to the same worker. The plan evaluation unit 31 or the user checks a violation location of the queue of pieces of work of the candidate plan by the determination logic in consideration of connection conditions between a plurality of various pieces of work such as a constraint that it is necessary to take the home rest time for a certain period of time or more, a constraint on the combination of the work start time and the work end time before and after the holiday, and a constraint that continuous work for long hours is prohibited. The connection condition itself between the plurality of pieces of work is not fed back to the plan generation device 1.

The constraint of type B will be described with reference to an example of a crew plan. For example, the type of vehicle that the crew member can drive may be limited by qualification. In addition, there is a case where the crew member is required to have a qualification necessary for work such as ticket confirmation performed during boarding, and a case where the crew member is required to have driving experience for a line included in a path.

Specific examples of the constraint of type C include, for example, a constraint that the total working hours within a certain period does not exceed a predetermined upper limit, a constraint that, for example, the total working hours within a certain period is equal to or more than a predetermined lower limit, and a constraint on whether holidays whose number is prescribed by law are taken within a predetermined period. The upper limit value and the lower limit value correspond to boundary values defining constraints. In the case of the constraint of type C, the plan evaluation unit 31 also provides (feeds back), to the plan generation device 1, information for identifying which of the upper limit and the lower limit is to be constrained, as information about the type of constraint that is violated.

Specific examples of the constraint of type D include a constraint that the work type "midnight" must not be continuous a certain number of times, a constraint that "midnight" and "early morning" must not be continuous, and the like.

The constraint condition acquisition unit 25 acquires, from the plan management device 2, constraint violation information determined that the candidate plan is not satisfied. The violation information primary storage unit 18 stores the acquired constraint violation information. The violation information conversion unit 19 reads the constraint violation information stored in the violation information primary storage unit 18, converts the constraint violation information into a format that can be interpreted by the planning system to store the converted information in a second constraint condition primary storage unit 20 as the second constraint condition. The constraint violation information stored in the violation information conversion unit 19 may be deleted, or may be overwritten at the time of writing to the next violation information primary storage unit 18. The list including the set of second constraint conditions stored in the second constraint condition primary storage unit 20 is referred to as a second constraint condition list. Further, the violation information conversion unit 19 generates the third constraint condition related to the work based on the new constraint violation generated by the exchange of the allocation of the plurality of pieces of work.

The constraint condition comparison unit 21 reads the second constraint condition list from the second constraint condition primary storage unit 20. After reading the second constraint condition list, the constraint condition comparison unit 21 may delete the second constraint condition list stored in the second constraint condition primary storage unit 20. Alternatively, the second constraint condition list may be overwritten at the next writing to the second constraint condition primary storage unit 20.

The constraint condition comparison unit 21 compares the constraint condition in the second constraint condition list with each constraint condition included in the first constraint condition list in the constraint condition storage unit 15. When the same constraint condition as the constraint condition in the second constraint condition list is not included in the first constraint condition list, the constraint condition adding unit 22 adds the constraint condition to the first constraint condition list as a new constraint condition. The constraint condition adding unit 22 sets an initial weight for the constraint condition, and adds the set weight to the first constraint condition list in association with the constraint condition. The weight may be a predetermined value, or the plan management device 2 may feed back the weight together with the constraint violation information and use the fed back weight. The weight may be determined by other methods. The weight is a kind of learning parameter, and may be tuned in advance through an actual case.

On the other hand, in a case where the same constraint condition as the second constraint condition in the second constraint condition list is included in the first constraint condition list, the weight changing unit 23 changes the weight of the constraint condition included in the first constraint condition list. For example, the weight is changed by adding a certain value or multiplying by a certain value. The value of the weight may be changed using the number of times the weight is updated. For example, as the number of changes increases, the value to be added may be decreased or increased. The weight may be changed by other methods. When the type of constraint is C and the constraint is a constraint related to the sum of attribute values within a period having the same attribute value and the same length as the constraint condition in the second constraint condition list, and only the boundary value (upper limit or lower limit) is different, the boundary value of the constraint condition included in the first constraint condition list is updated by the boundary value included in the constraint condition in the second constraint condition list, and further, the weight of the constraint condition is updated. Only the boundary value may be updated.

As illustrated in FIGS. 9 and 10 described above, in a case where the user performs the operation of resolving the constraint violation by partially correcting the candidate plan by the operation of exchanging the work, it is possible to learn the magnitude relationship of the "weight" of the soft constraint based on the operation content of the user.

For example, it is assumed that the user performs the exchange operation of FIG. 9 described above in order to solve the constraint violation (the continuation of the path 30 → the path 13). When it is assumed that the constraint violation by the queue of "47 → 13" newly occurs as illustrated in FIG. 11 after the exchange operation, it is interpreted that the user recognizes that the weight of the constraint violation of "30 → 13" is larger than the weight of the constraint violation of "47 → 13", and it is possible to correct the weight of "30 → 13" from the initial setting using this information. For example, assuming that "30 → 13" is a location newly pointed out as a constraint violation and "47 → 13" is an already learned constraint, a value obtained by adding a certain amount to the weight of "47 → 13" at the current time can be used as an initial weight of a new constraint "30 → 13".

In addition, in a case where both the constraint violations before and after the exchange (In the example of FIG. 11, "30 → 13" and "47 → 13") are learned constraints, the weights of both the constraints before and after the exchange may be simultaneously corrected so as to satisfy the magnitude relationship. For example, there may be a method of correcting the weight of "30 → 13" by adding a certain amount to the weight of "47 → 13" at the current time, or, conversely, correcting to the weight of "47 → 13" by subtracting a certain amount from the weight of "30 → 13" at the current time, but a calculation method is not specifically limited in the present example.

It is assumed that the user performs the exchange operation in FIG. 10 described above in order to solve the constraint violation (the continuation of the path 30 → the path 13). As illustrated in FIG. 12, when the constraint violation by the queue of "41 → 30" newly occurs at the exchange destination after the exchange operation, it is interpreted that the user recognizes that the weight of the constraint violation of "30 → 13" is larger than the weight of the constraint violation of "41 → 30", and it is possible to correct the weight of "30 → 13" from the initial setting using this information as in the previous example. Furthermore, in a case where both "30 → 13" and "41 → 30" are already learned constraints, the weights of both can be simultaneously corrected so as to satisfy the magnitude relationship.

In a case where the allocated paths are exchanged when the user solve the constraint violation by the operation of exchanging the work, a plurality of locations (three or more locations) may be exchanged simultaneously. In this case, it is possible to acquire information about the magnitude relationship of the weights of the constraints recognized by the user by comparing the magnitude relationship of the sums of the weights of the violation constraints before and after the exchange operation of the exchange location.

For example, in the example of FIG. 13A, it is assumed that the number of constraint violations increased from 2 before the exchange to 3 due to the exchange of the plurality of pieces of work (paths). In this case, assuming that the weight of the new constraint "30 → 13" is x and the current value is set to each of the weights of the other four constraints, it is considered that the user has recognized that the total sum of the weights of the constraint violations after the exchange is smaller than the total sum of the weights of the constraint violations before the exchange. In this example, it is interpreted that X + 2 > 2 + 2 + 3 holds, and an initial value of 5 or more can be set to x.

In the example of FIG. 13B, assuming that all the constraint violations before and after the exchange are learned constraints, for example, the correction coefficient k is introduced, the correction coefficient k is set so that the inequality holds, and the weights of the constraint violation that has appeared after the exchange operation are proportionally divided and uniformly updated by multiplying it by the correction coefficient k having a value of (4 + 3)/(2 + 1 + 3) or less.

Note that, in the present example, a specific calculation method of updating these weights is not limited.

Hereinafter, some specific examples of updating the constraint conditions in the first constraint condition list based on the constraint violation information fed back from the plan management device 2 will be described.

[First example]

FIG. 14A is a diagram illustrating an example of a candidate plan provided from the plan generation device 1 to the plan management device 2. FIG. 14B is a diagram illustrating a location detected by the plan evaluation unit 31 as violating the constraint of type A in the candidate plan of FIG. 14A. The detected location is surrounded by a broken line frame.

The plan evaluation unit 31 determines whether there is a location (case) that violates the constraint in the candidate plan of FIG. 14A. In this example, two cases of "path 5 → path 3" and "path 4 → public holiday → path 6" illustrated in FIG. 14B are detected as violating the constraint.

The constraint condition acquisition unit 25 of the plan generation device 1 acquires constraint violation information about the two violations of the constraint from the plan management device 2. The constraint condition acquisition unit 25 converts, by the plan generation device 1, the constraint violation information into a format that can be interpreted, and provides a second constraint condition list including two constraint conditions to the constraint condition comparison unit 21.

The constraint condition comparison unit 21 compares each constraint condition included in the second constraint condition list with the constraint condition included in the first constraint condition list, and determines whether the constraint conditions are the same. When the constraint condition included in the second constraint condition list is different from the constraint condition included in the first constraint condition list, the constraint condition is added to the first constraint condition list. An initial weight is set to the constraint condition to be added. When the constraint condition included in the second constraint condition list is the same as the constraint condition included in the first constraint condition list, the weight of the constraint condition in the first constraint condition list is changed.

FIG. 15 is a diagram illustrating an update example of the first constraint condition list. As illustrated on the right side of FIG. 15, the first constraint condition list before the update stores a constraint condition that prohibits "path 5 → path 3" and a constraint condition that prohibits "path 9 → path 5". Both weights are 0.5. Other constraint conditions are also stored, but are not illustrated.

As illustrated in the center of FIG. 15, as the constraint violation information fed back from the plan management device 2, a constraint that prohibits "path 5 → path 3" and a constraint that prohibits "path 4 → public holiday → path 6" are illustrated.

The fed back "path 5 → path 3" is the same as "path 5 → path 3" included in the first constraint condition list. Therefore, as illustrated on the left side of FIG. 15, 0.1 is added to the weight of "path 5 → path 3" in the first constraint condition list to be 0.6.

The fed back "path 4 → public holiday → path 6" is not included in the first constraint condition list. Therefore, as illustrated on the left side of FIG. 15, "path 4 → public holiday → path 6" is added to the first constraint condition list in association with the initial weight 0.5 as a new constraint condition.

[Second example]

FIG. 16A is a diagram illustrating an example of a candidate plan provided from the plan generation device 1 to the plan management device 2. FIG. 16B is a diagram illustrating a location detected by the plan evaluation unit 31 as violating the constraint of type B in the candidate plan of FIG. 16A. The detected location is surrounded by a broken line frame. It is assumed that the vehicle type in FIGS. 16A and 16B is one of attributes of work (path).

In this example, the date on which the path 3 to be operated by a train is allocated to the crew member 2 and the date on which the path 5 to be operated by a diesel locomotive (D train) is allocated to the crew member 2 are detected as the constraint violation locations.

FIG. 17 is a diagram illustrating an update example of the first constraint condition list. As illustrated in the upper right side of FIG. 17, the first constraint condition list before the update stores a constraint condition that prohibits "crew member 1 & train (crew member 2 to work on a train)" and a constraint condition that prohibits "crew member 2 & D train (crew member 2 to work on a diesel locomotive (D train))". Both weights are 0.5. Other constraint conditions are also stored, but are not illustrated.

As illustrated in the center of FIG. 17, a constraint that prohibits "crew member 2 & train" and a constraint that prohibits "crew member 2 & D train" are illustrated as the constraint violation information fed back from the plan management device 2.

The fed back "crew member 2 & D train" is the same as "crew member 2 & D train" included in the first constraint condition list. Therefore, as illustrated on the left side of FIG. 17, the weight of "crew member 2 & D train" in the first constraint condition list is added by 0.1 to be 0.6.

The fed back "crew member 1 & train" is not included in the first constraint condition list. Therefore, as illustrated on the left side of FIG. 17, "crew member 1 & train" is added to the first constraint condition list as a new constraint condition. The initial weight of "crew member 1 & train" is 0.5.

[Third example]

FIG. 18A is a diagram illustrating an example of a candidate plan provided from the plan generation device 1 to the plan management device 2. FIG. 18B is a diagram illustrating a location detected by the plan evaluation unit 31 as violating the constraint of type C in the candidate plan of FIG. 18A. The detected location is surrounded by a broken line frame. In FIG. 18, the duty (duty hours) is one of the attributes of the work (path).

The plan evaluation unit 31 determines that the constraint is not satisfied and detects a location indicated by a frame line in a dotted line in FIG. 16B.

FIG. 19 is a diagram illustrating an update example of the first constraint condition list. As illustrated in the upper right side of FIG. 19, the first constraint condition list before the update stores a constraint condition that requires "$\Sigma^8_{d=1}$ duty hour d < 60" and a constraint condition that requires "$\Sigma^8_{d=1}$ public holiday.> 1". "$\Sigma^8_{d=1}$ duty hour d < 60" requires that the total of the duty hours for 8 days be less than 60 hours. In other words, the total duty hours for 8 days is prohibited from being 60 hours or more. "$\Sigma^8_{d=1}$ public holiday > 1" requires that the number of public holidays in eight days be more than one. In other words, the number of public holidays in eight days is prohibited from being one or less. Other constraint conditions are also stored, but are not illustrated.

As illustrated in the lower right side of FIG. 19, "$\Sigma^8_{d=1}$ duty hour d < 56" is indicated as the constraint violation information fed back from the plan management device 2. The boundary value (56 in this example) is the sum of target attribute values of locations determined to violate the constraint of type C in the candidate plan, and corresponds to the total sum 56 of the duty hours of crew member 2 for 8 days in FIG. 18(B).

As in "$\Sigma^8_{d=1}$ duty hour d < 60" included in the first constraint condition list, the fed back "$\Sigma^8_{d=1}$ duty hour d < 56" is a constraint condition that constraints the upper limit of the total sum of the duty hours for 8 days, and only the boundary value (60 in this example) is different. Therefore, as illustrated on the left side of FIG. 19, the boundary value 60 of "$\Sigma^8_{d=1}$ duty hour d < 60" in the first constraint condition list is changed to 56. Further, 0.1 is added to the weight to be 0.6. In this example, the boundary value of the constraint condition is changed, but a configuration in which a constraint condition having a different boundary value is added as a new constraint condition may be used. In this case, an initial weight (for example, 0.5) is set to the new constraint condition. In addition, there may be a method of changing only the boundary value and not changing the weight.

[Fourth example]

FIG. 20A is a diagram illustrating an example of a candidate plan provided from the plan generation device 1 to the plan management device 2. FIG. 20B is a diagram illustrating a location detected by the plan evaluation unit 31 as violating the constraint of type D in the candidate plan of FIG. 20A. The detected location is surrounded by a broken line frame. In FIG. 20, it is assumed that a work type such as day duty, midnight, or early morning is one of attributes of work (path).

FIG. 21 is a diagram illustrating an update example of the first constraint condition list. As illustrated in the upper right side of FIG. 21, the first constraint condition list before the update stores a constraint condition that prohibit "midnight → midnight". The weight is 0.5. Other constraint conditions are also stored, but are not illustrated.

As illustrated in the lower right side of FIG. 21, a constraint condition that prohibits "midnight → midnight" and a constraint condition that prohibits "midnight → early morning" are illustrated as the constraint conditions fed back from the plan management device 2.

The fed back "midnight → midnight" is the same as "midnight → midnight" included in the first constraint condition list. Therefore, as illustrated on the left side of FIG. 21, the weight of "midnight → midnight" in the first constraint condition list is added by 0.1 to be 0.6.

The fed back "midnight → early morning" is not included in the first constraint condition list. Therefore, as illustrated on the left side of FIG. 21, "midnight → early morning" is added to the first constraint condition list as a new constraint condition. The initial weight of "midnight → early morning" is 0.5.

Here, an example of formulating the penalty function of Expression (1) based on the constraint conditions included in the first constraint condition list will be specifically described.

[Type A constraint]

$$\text{IF } \sum_{t=0}^{T_k} x_{(d+t)mj_k(t)} \leq T_k \quad (\forall k \in K_1, \forall d \in \{\forall d \in D | d + T_k \in D\}, \forall m \in M)$$
$$p_k(x)=0$$
$$\text{ELSE} \qquad (5)$$
$$p_k(x)=1$$

The k-th constraint condition ($k \in K_1$) prohibits any worker from being allocated ($T_k$+1) pieces of work in a particular order ($j_k(0)$, $j_k(1)$,..., $j_k(T_k)$). $K_1$ represents the number of constraint conditions of the same type, k represents the ID of the constraint condition, and $T_k$ represents the number of queued pieces of work prohibited by the constraint condition k.

[Type B constraint]

$$\text{IF } a_{kj}x_{dmj}=0(\forall k \in K_2, \forall d \in D, \forall m \in M_k, \forall J \in J(d))$$
$$p_k(x) = 0$$
$$\text{ELSE}$$
$$p_k(x) = 1 \qquad (6)$$

The allocation of the job j having a specific attribute to the worker included in the set $M_k$ is prohibited. The flag ($a_{1j}$, $a_{2j}$,..., $a_{Kj}$) indicates whether the work j corresponds to a target attribute under the constraint condition k. $a_{kj}$ = 1 indicates "correspond", and $a_{kj}$ = 0 indicates "not correspond". $K_2$ is the number of constraint conditions of the same type, and k is the ID of the constraint condition.

[Type C constraint (case of limiting upper limit value)]

$$\text{IF} \quad \sum_{t=0}^{T_k} \sum_{j \in J(d+t)} a_{kj} x_{(d+t)mj} \leq b_k \quad (\forall k \in K_3, \forall d \in D_k, \forall m \in M)$$

$$p_k(\boldsymbol{x})=0$$

$$\text{ELSE}$$

$$p_k(\boldsymbol{x})=1 \qquad (7)$$

$$p_k(\boldsymbol{x})=\sum_{t=0}^{T_k} \sum_{j \in J(d+t)} a_{kj} x_{(d+t)mj} - b_k \qquad (7')$$

One of Expression (7) and Expression (7') is used. This is a constraint condition that prohibits the sum of the attributes $a_{kj}$ of $T_k$+1 pieces of work allocated to the worker from the start date $d \in D_k$ from exceeding a certain value $b_k$. $a_{kj}$ is a value of a target attribute of the work j ed under the constraint condition k. $K_3$ is the number of constraint conditions of the same type, and k is the ID of the constraint condition.

[Example 4]

[Type C constraint (case of limiting lower limit value)]

$$\text{IF} \quad \sum_{t=0}^{T_k} \sum_{j \in J(d+t)} a_{kj} x_{(d+t)mj} \geq b_k \quad (\forall k \in K_4, \forall d \in D_k, \forall m \in M)$$

$$p_k(\boldsymbol{x})= 0$$

$$\text{ELSE}$$

$$p_k(\boldsymbol{x})= 1 \qquad (8)$$

$$p_k(\boldsymbol{x})= b_k - \sum_{t=0}^{T_k} \sum_{j \in J(d+t)} a_{kj} x_{(d+t)mj} \qquad (8')$$

One of Expression (8) and Expression (8') is used. The sum of the attributes $a_{kj}$ of $T_k$+1 pieces of work allocated to the worker from the start date $d \in D_k$ is prohibited from falling below a certain value $b_k$. $a_{kj}$ is a value of a target attribute of work j under the constraint condition k. $K_4$ is the number of constraint conditions of the same type, and k is the ID of the constraint condition.

[Type D constraint]

$$\text{IF } \sum_{t=0}^{T_k} \sum_{j \in J_{(d+t)}} a_{kj}(t)\, x_{(d+t)mj} \le T_k \ \ (\forall k \in K_5, \forall d \in \{\forall d \in D | d + T_k \in D\}, \forall m \in M)$$

$$p_k(\boldsymbol{x}) = 0$$

$$\text{ELSE} \qquad\qquad (9)$$

$$p_k(\boldsymbol{x}) = 1$$

No worker must be allocated $T_k$+1 pieces of work in the order of the particular attributes defined by the flag $a_{kj(t)}$. The flag ($a_{1j}(0)$, $a_{1j}(1)$,..., $a_{1j}(T1)$,..., $a_{Kj}(0)$, $a_{Kj}(1)$,..., $a_{Kj}(T_K)$) indicates whether the work j corresponds to the t-th attribute in the queue of attributes prohibited by the constraint condition k. $a_{kj(t)}$ = 1 indicates "correspond", and $a_{Kj(t)}$ = 0 indicates "not correspond". $K_5$ represents the number of constraint conditions of the same type, k represents the ID of the constraint condition, and $T_k$ represents the number of queued pieces of work prohibited by the constraint condition k.

FIG. 22 is a flowchart of an example of a process of the planning system according to the present example. The plan generation unit 17 reads a list of work (work data) to be allocated to each day from the work data storage unit 11, and reads, from the reservation data storage unit 12, reservation information about a holiday such as an annual holiday or work whose allocation is already determined (step S1). In addition, the initial plan is read from the initial plan storage unit 13, and a preset constraint condition (initial constraint condition) is read from the initial constraint condition storage unit 14. The data read in step S1 is collectively referred to as initial data.

Subsequently, the plan generation unit 17 reads the first constraint condition list including the learned constraint condition (first constraint condition) from the constraint condition storage unit 15 (step S2).

Next, the plan generation unit 17 generates a candidate plan based on the initial constraint condition, the constraint condition in the first constraint condition list, and the data read in step S1 (step S3). The plan generation unit 17 transmits, to the plan management device 2, the candidate plan data and a request for checking whether there is a constraint violation in the candidate plan data.

The plan management device 2 performs a constraint violation check on the candidate plan based on the check request (step S4). As an example, by the above-described method or the like, the user checks the candidate plan displayed on the input/output unit 33, checks the violation location that does not satisfy the constraint, and inputs the type of constraint that the violation location violates. In this case, the plan evaluation unit 31 feeds back the constraint violation information including the new constraint input from the user to the plan generation device 1. Furthermore, in a case where the user partially corrects the work by the above-described exchange operation, the constraint violation information appearing after the correction operation is also fed back to the plan generation device 1.

The violation information conversion unit 19 converts the constraint violation information for the candidate plan fed back from the plan management device 2 into a second constraint condition in a format that can be interpreted by the plan generation device 1 to generate a second constraint condition list including the second constraint condition (step S5).

It is determined whether the user has partially corrected the work by the exchange operation described above (step S6). In a case where the user has partially corrected the candidate plan (YES in step S6), the constraint violation information appearing after the correction operation is converted into a third constraint condition in a format that can be interpreted by the plan generation device 1 to generate a third constraint condition list including the third constraint condition (step S7).

Next, the constraint condition comparison unit 21 sequentially compares the second constraint condition in the second constraint condition list with the first constraint condition in the first constraint condition list (step S8). It is determined whether the second constraint condition in the second constraint condition list is the same as the first constraint condition included in the first constraint condition list, that is, whether the second constraint condition is a constraint condition that has already been detected in the constraint violation check or a new constraint condition (step S9).

When the second constraint condition in the second constraint condition list is not the same as the first constraint condition included in the first constraint condition list, that is, when the second constraint condition is a new constraint condition, an initial weight is set to the new constraint condition (step S10). In this case, the new constraint condition in which the initial weight is set is added to the first constraint condition list. In a case where the third constraint condition list exists at the time of setting the initial weight, the initial weight obtained by the comparison calculation between the second constraint condition list and the third constraint condition list is added.

When the constraint condition in the second constraint condition list is the same as the constraint condition included in the first constraint condition list, the weight of the constraint condition included in the first constraint condition list is increased. As a result, the constraint condition can be more strongly reflected at the time of generating the next candidate plan by the plan generation unit 17. When the third constraint condition list exists, the weight is corrected to a weight obtained by the comparison calculation between the second constraint condition list and the third constraint condition list (step S11). In addition, in a case where the constraint condition in the second constraint condition list is the type C, is a constraint related to the sum of the same attribute values in the same period as the constraint condition included in the first constraint condition list, and only the boundary values are different between the two, the boundary value is updated, and the weight is further updated. Specifically, when the violation exceeding the upper limit value (boundary value) of the sum occurs, the upper limit value of the constraint condition is made smaller than that in the current state (the constraint is stricter). On the other hand, when the violation less than the lower limit value (boundary value) of the sum occurs, the lower limit value of the constraint condition is corrected to be larger than that in the current state (the constraint is stricter).

It is determined whether the process of steps S8 to S11 has been performed for all of the second constraint conditions in the second constraint condition list (step S12). When there is a second constraint condition for which the process is not performed, the process of steps S8 to S11 is repeated. In a case where the process for all the second constraint conditions has been performed, it is determined whether the end condition has been satisfied (step S13). When the end condition is not satisfied, the process returns to step S3. In the returned step S3, a new candidate plan is generated using the updated first constraint condition list, and a constraint violation check is performed (steps S3 to S12). Steps S3 to S12 are repeated until the end condition is satisfied.

When the end condition is satisfied, the last generated candidate plan is output as a final plan to the plan management device 2 (step S14). Alternatively, a candidate plan having the smallest objective function value or a candidate plan having an objective function value smaller than a threshold value among the candidate plans stored in the plan storage unit 16 may be output as a final plan.

The input/output unit 33 of the plan management device 2 displays the final plan on the display device. The final plan may be stored in a storage device in the plan management device 2 or an external storage device.

Here, an example of a method of determining an end condition will be described. In a case where the plan evaluation unit 31 performs the constraint violation check by the program operation, it may be determined that the end condition is satisfied when steps S3 to S12 are repeated a predetermined number of times. In addition, when steps S3 to S12 may be repeated until a predetermined time limit is reached, and the time limit is reached, it may be determined that the end condition is satisfied. In addition, steps S3 to S12 may be repeated until there is no constraint violation or the loop may be repeated until the value of the objective function (penalty sum) is equal to or less than the threshold value. The success or failure of the end condition may be determined by other methods. In a case where the user performs the constraint violation check using the input/output unit 33 (GUI), the user may determine the timing at which the user himself/herself ends the repetition of steps S3 to S12. The user may input instruction data for ending the repetition, and the repetition may be ended based on the instruction data.

As described above, according to the present example, the plan management device or the user detects and feeds back, as constraint violation information, the constraint that the candidate plan generated by the plan generation device 1 violates. The plan generation device accumulates the constraint conditions based on the constraint violation information in the first constraint condition list. Specifically, when the constraint condition same as the constraint condition does not exist in the first constraint condition list, a weight is set for the constraint condition and added to the first constraint condition list. When the constraint condition same as the constraint condition exists in the first constraint condition list, the weight of the same constraint condition existing in the first constraint condition list is updated. As described above, by repeating the generation of the candidate plan, the accumulation of the constraint conditions, and the change in the weight of the constraint condition, it is possible to realize a general-purpose planning system capable of easily coping with the change, addition, and the like of the constraint at the site.

For example, at the time of initial introduction of the system or a work rule change, the new or changed constraint condition can be reflected in a format that can be handled by the plan generation device by rewriting the evaluation algorithm or the rule of the plan management device 2, and maintainability is improved. In addition, it is possible to gradually adapt to a small difference in constraints for each site by feedback of the user at each site.

(Hardware configuration)

FIG. 23 is a diagram illustrating a hardware configuration of the plan generation device 1 or the plan management device 2 of FIG. 1. The plan generation device 1 or the plan management device 2 in FIG. 1 includes a computer device 600. The computer device 600 includes a CPU 601, an input interface 602, a display device 603, a communication device 604, a main storage device 605, and an external storage device 606, which are connected to each other via a bus 607.

The central processing unit (CPU) 601 executes an information processing program, which is a computer program, on the main storage device 605. The information processing program is a program that realizes each of the above-described functional configurations of the present device. The information processing program may be realized not by one program but by a combination of a plurality of programs and scripts. The CPU 601 executes the information processing program to implement each functional configuration.

The input interface 602 is a circuit for inputting an operation signal from an input device such as a keyboard, a mouse, and a touch panel to the present device. The input interface 602 corresponds to an input unit or an input/output unit.

The display device 603 displays data output from the present device. The display device 603 is, for example, a liquid crystal display (LCD), an organic electroluminescence display, a cathode ray tube (CRT), or a plasma display (PDP), but is not limited thereto. Data output from the computer device 600 can be displayed on the display device 603. The display device 603 corresponds to an input/output unit.

The communication device 604 is a circuit for the present device to communicate with an external device in a wireless or wired manner. The data can be input from an external device via the communication device 604. Data input from the external device can be stored in the main storage device 605 or the external storage device 606.

The main storage device 605 stores an information processing program, data necessary for execution of the information processing program, data generated by execution of the information processing program, and the like. The information processing program is developed and executed on the main storage device 605. The main storage device 605 is, for example, a RAM, a DRAM, or an SRAM, but is not limited thereto. Each storage unit or database in FIG. 1 may be constructed on the main storage device 605.

The external storage device 606 stores an information processing program, data necessary for execution of the information processing program, data generated by execution of the information processing program, and the like. The information processing program and the data are read out to the main storage device 605 when the information processing program is executed. Examples of the external storage device 606 include a hard disk, an optical disk, a flash memory, and a magnetic tape, but are not limited thereto. Each storage unit or database in FIG. 1 may be constructed on the external storage device 606.

Note that the information processing program may be installed in the computer device 600 in advance or may be stored in a storage medium such as a CD-ROM. Furthermore, the information processing program may be uploaded on the Internet.

Furthermore, the present device may be configured by a single computer device 600, or may be configured as a system including a plurality of computer devices 600 connected to each other.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

## Claims

1. An information processing apparatus comprising:

    a user interface configured to cause a user to check a constraint violation of a candidate plan of work to be performed by a plurality of workers; and
    an updater configured to update constraint information including a first constraint condition related to the work based on the constraint violation of the candidate plan.

2. The information processing apparatus according to claim 1, further comprising:

    a plan generator configured to generate a candidate plan for work to be performed by a plurality of workers based on constraint information including the first constraint condition related to the work, wherein
    the user interface causes a user to check a constraint violation of the candidate plan generated by the plan generator.

3. The information processing apparatus according to claim 1 or 2, wherein
the user interface outputs constraint violation information including at least one of a worker for which a constraint violation of the candidate plan has occurred and a date and time at a time of the constraint violation, and a type of violated constraint.

4. The information processing apparatus according to claim 3, further comprising:

    a violation information converter configured to generate a second constraint condition related to the work based on the constraint violation information, wherein
the updater updates the constraint information based on the second constraint condition.

5. The information processing apparatus according to claim 4, further comprising:

a first storage configured to store a plurality of the first constraint conditions;
a second storage configured to store a plurality of the second constraint conditions; and
a condition adder configured to compare the plurality of first constraint conditions stored in the first storage with the plurality of second constraint conditions stored in the second storage to store a second constraint condition not stored in the first storage as a new first constraint condition in the first storage.

6. The information processing apparatus according to claim 5, further comprising:

a determinator configured to determine whether a constraint violation of the candidate plan satisfies a predetermined condition, wherein
generation of the second constraint condition by the violation information converter, update of the constraint information by the updater, and storage of the new first constraint condition in the first storage are repeatedly performed until the constraint violation of the candidate plan satisfies the predetermined condition.

7. The information processing apparatus according to any one of claims 4 to 6, wherein

the user interface causes a user to exchange allocation of a plurality of pieces of the work to be performed by the plurality of workers and check a new constraint violation due to the exchange of the candidate plan, and
the violation information converter generates a third constraint condition related to the work based on the new constraint violation generated by the exchange of the allocation of the plurality of pieces of work.

8. The information processing apparatus according to claim 7, wherein
the exchange includes an exchange of unallocated work and allocated work.

9. The information processing apparatus according to claim 7, wherein
the exchange includes an exchange between allocated pieces of work.

10. The information processing apparatus according to claim 7, wherein
the exchange includes an exchange of three or more pieces of work.

11. The information processing apparatus according to claim 7, wherein
the constraint information before the exchange is performed includes a new constraint condition not included in the first constraint condition.

12. The information processing apparatus according to claim 7, wherein
all pieces of the constraint information before the exchange is performed are included in the first constraint condition.

13. The information processing apparatus according to claim 7, wherein

the constraint information includes a weight of the first constraint condition, and
the updater changes the weight of the first constraint condition same as a weight of the second constraint condition when the first constraint condition same as the second constraint condition is included in the constraint information, and changes the weight of the first constraint condition same as a weight of the third constraint condition when the first constraint condition same as the third constraint condition is included in the constraint information.

14. An information processing method comprising:

causing a user to check a constraint violation of a candidate plan of work to be performed by a plurality of workers; and
updating constraint information including a first constraint condition related to the work based on the constraint violation of the candidate plan checked by the user.

**15.** A computer executing:

causing a user to check a constraint violation of a candidate plan of work to be performed by a plurality of workers; and
updating constraint information including a first constraint condition related to the work based on the constraint violation of the candidate plan checked by the user.

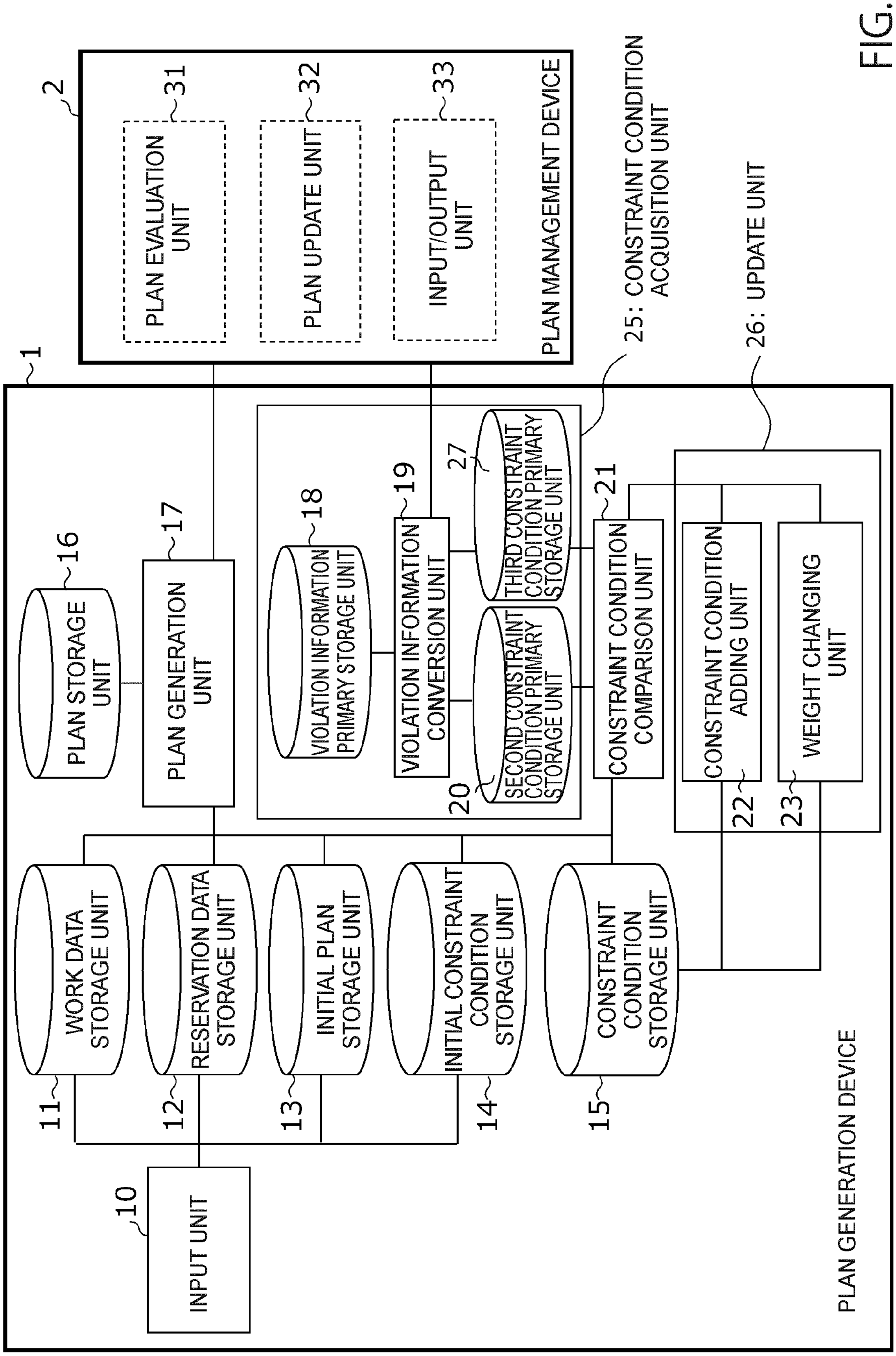
2
PLAN EVALUATION UNIT
31
PLAN UPDATE UNIT
32
INPUT/OUTPUT UNIT
33
PLAN MANAGEMENT DEVICE
25: CONSTRAINT CONDITION ACQUISITION UNIT
26: UPDATE UNIT
1
PLAN STORAGE UNIT
16
PLAN GENERATION UNIT
17
VIOLATION INFORMATION PRIMARY STORAGE UNIT
18
VIOLATION INFORMATION CONVERSION UNIT
19
THIRD CONSTRAINT CONDITION PRIMARY STORAGE UNIT
27
SECOND CONSTRAINT CONDITION PRIMARY STORAGE UNIT
20
CONSTRAINT CONDITION COMPARISON UNIT
21
CONSTRAINT CONDITION ADDING UNIT
22
WEIGHT CHANGING UNIT
23
WORK DATA STORAGE UNIT
11
RESERVATION DATA STORAGE UNIT
12
INITIAL PLAN STORAGE UNIT
13
INITIAL CONSTRAINT CONDITION STORAGE UNIT
14
CONSTRAINT CONDITION STORAGE UNIT
15
INPUT UNIT
10
PLAN GENERATION DEVICE

FIG. 1

| | 11/1 | 11/2 | 11/3 | 11/4 | ... |
|---|---|---|---|---|---|
| CREW MEMBER 1 | PATH 1 | PATH 2 | HOLIDAY | ANNUAL HOLIDAY | |
| CREW MEMBER 2 | HOLIDAY | PATH 1 | PATH 2 | HOLIDAY | |
| CREW MEMBER 3 | - | HOLIDAY | PATH 1 | PATH 2 | |
| CREW MEMBER 4 | PATH 9 | - | HOLIDAY | PATH 3 | |
| | | | | | |

...

FIG. 2

```
PATH {
  HOLIDAY: HANDLING
  WORK TYPE: MIDNIGHT
  DUTY HOURS:8H
  WORK START:8:00
  WORK END :17:00
  REST TIME:11:30-12:15
  VEHICLE TYPE: LOCOMOTIVE
  TRANSIT SECTION: A SECTION, K SECTION,..., M SECTION
  ..
}
```

FIG. 3

WORK ASSIGNMENT TABLE

| GROUP ONE 18/18 | 11/01 THURSDAY | 11/02 FRIDAY | 11/03 SATURDAY | 11/04 SUNDAY | 11/05 MONDAY | 11/06 TUESDAY | 11/07 WEDNESDAY | 11/08 THURSDAY | 11/09 FRIDAY | 11/10 SATURDAY | 11/11 SUNDAY | 11/12 MONDAY | 11/13 TUESDAY | 11/14 WEDNESDAY | 11/15 THURSDAY | 11/16 FRIDAY | 11/17 SATURDAY | 11/18 SUNDAY | 11/19 MONDAY | 11/20 TUESDAY |
|---|---|---|---|---|---|---|---|---|---|---|---|---|---|---|---|---|---|---|---|---|
| WORKER A | 42 | – | ANNUAL HOLIDAY | ANNUAL HOLIDAY | PUBLIC HOLIDAY | SPECIAL HOLIDAY | 10 | 17 | – | SPECIAL HOLIDAY | 13 | – | PUBLIC HOLIDAY | 16 | – | 13 | – | SPECIAL HOLIDAY | PUBLIC HOLIDAY | 12 |
| WORKER B | SPECIAL HOLIDAY | PUBLIC HOLIDAY | ANNUAL HOLIDAY | 41 | 15 | – | SPECIAL HOLIDAY | PUBLIC HOLIDAY | 17 | – | 14 | – | SPECIAL HOLIDAY | PUBLIC HOLIDAY | 16 | – | ANNUAL HOLIDAY | ANNUAL HOLIDAY | SPECIAL HOLIDAY | PUBLIC HOLIDAY |
| WORKER C | ANNUAL HOLIDAY | SPECIAL HOLIDAY | PUBLIC HOLIDAY | 12 | 11 | 15 | – | SPECIAL HOLIDAY | 10 | 17 | – | SPECIAL HOLIDAY | 42 | – | PUBLIC HOLIDAY | 16 | – | 13 | – | SPECIAL HOLIDAY |
| WORKER D | SPECIAL HOLIDAY | 26 | – | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 | – | 13 | – |
| WORKER E | PUBLIC HOLIDAY | 13 | – | SPECIAL HOLIDAY | PUBLIC HOLIDAY | 12 | 11 | 41 | ANNUAL HOLIDAY | SPECIAL HOLIDAY | PUBLIC HOLIDAY | 42 | – | 14 | – | SPECIAL HOLIDAY | 20 | 16 | – | SPECIAL HOLIDAY |
| WORKER F | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 22 | 21 | SPECIAL HOLIDAY |
| WORKER G | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 |
| WORKER H | SPECIAL HOLIDAY | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 42 |
| WORKER I | ANNUAL HOLIDAY | SPECIAL HOLIDAY | PUBLIC HOLIDAY | ANNUAL HOLIDAY | PUBLIC HOLIDAY | 14 | – | 10 | SPECIAL HOLIDAY | 12 | 11 | 15 | – | SPECIAL HOLIDAY | PUBLIC HOLIDAY | 17 | – | 14 | – | SPECIAL HOLIDAY |
| WORKER J | 14 | – | SPECIAL HOLIDAY | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – |
| WORKER K | 31 | 10 | ANNUAL HOLIDAY | SPECIAL HOLIDAY | PUBLIC HOLIDAY | 16 | – | 13 | – | SPECIAL HOLIDAY | PUBLIC HOLIDAY | 12 | 11 | PUBLIC HOLIDAY | 20 | TROUBLE 42 | – | PUBLIC HOLIDAY | ANNUAL HOLIDAY | 14 |
| WORKER L | 17 | – | SPECIAL HOLIDAY | PUBLIC HOLIDAY | 30 | 13 | – | PUBLIC HOLIDAY | 13 | – | 41 | SPECIAL HOLIDAY | 12 | 11 | 15 | – | SPECIAL HOLIDAY | PUBLIC HOLIDAY | ANNUAL HOLIDAY | PUBLIC HOLIDAY |

FIG. 4

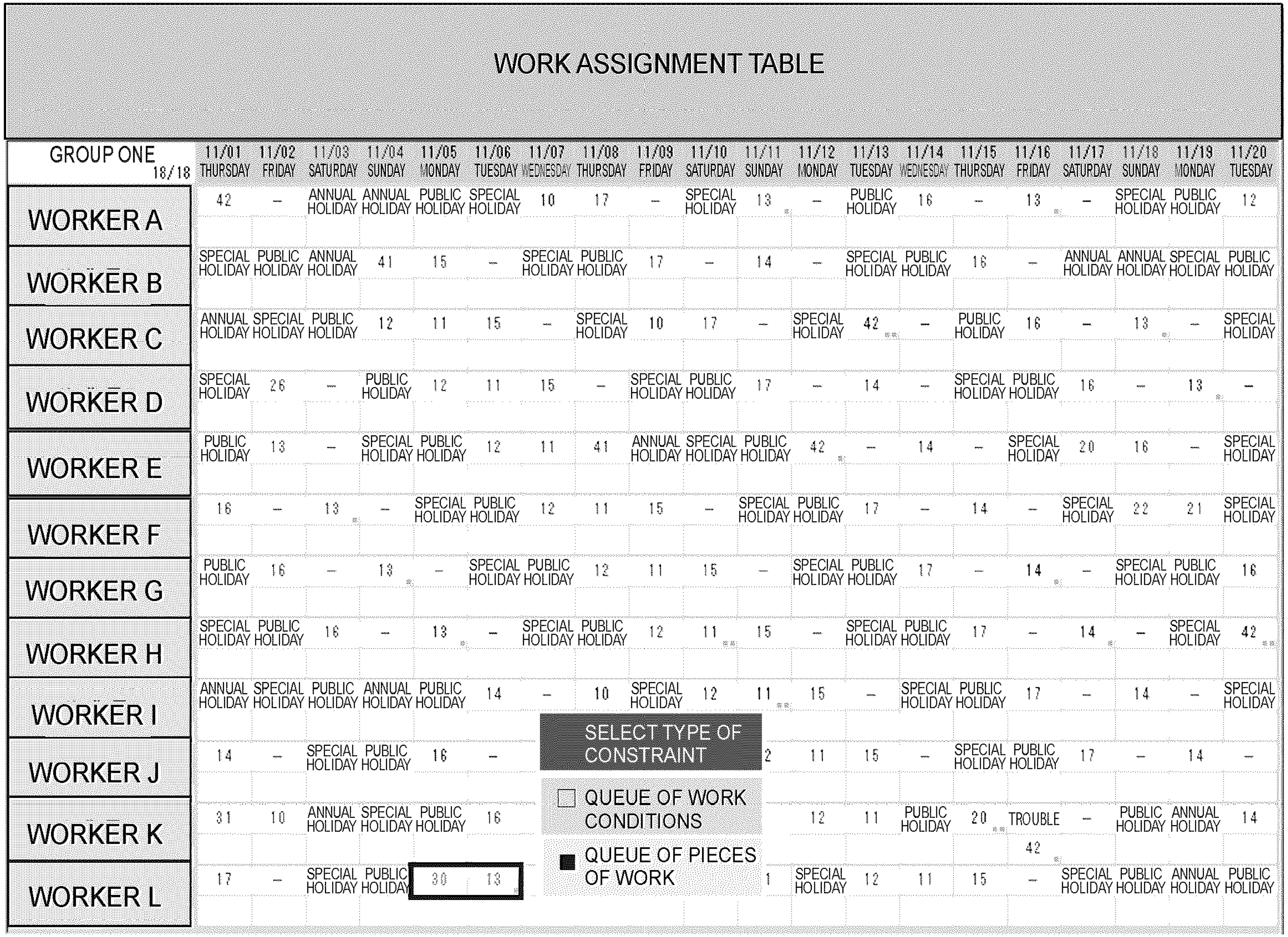

WORK ASSIGNMENT TABLE

| GROUP ONE 18/18 | 11/01 THURSDAY | 11/02 FRIDAY | 11/03 SATURDAY | 11/04 SUNDAY | 11/05 MONDAY | 11/06 TUESDAY | 11/07 WEDNESDAY | 11/08 THURSDAY | 11/09 FRIDAY | 11/10 SATURDAY | 11/11 SUNDAY | 11/12 MONDAY | 11/13 TUESDAY | 11/14 WEDNESDAY | 11/15 THURSDAY | 11/16 FRIDAY | 11/17 SATURDAY | 11/18 SUNDAY | 11/19 MONDAY | 11/20 TUESDAY |
|---|---|---|---|---|---|---|---|---|---|---|---|---|---|---|---|---|---|---|---|---|
| WORKER A | 42 | – | ANNUAL HOLIDAY | ANNUAL HOLIDAY | PUBLIC HOLIDAY | SPECIAL HOLIDAY | 10 | 17 | – | SPECIAL HOLIDAY | 13 | – | PUBLIC HOLIDAY | 16 | – | 13 | – | SPECIAL HOLIDAY | PUBLIC HOLIDAY | 12 |
| WORKER B | SPECIAL HOLIDAY | PUBLIC HOLIDAY | ANNUAL HOLIDAY | 41 | 15 | – | SPECIAL HOLIDAY | PUBLIC HOLIDAY | 17 | – | 14 | – | SPECIAL HOLIDAY | PUBLIC HOLIDAY | 16 | – | ANNUAL HOLIDAY | ANNUAL HOLIDAY | SPECIAL HOLIDAY | PUBLIC HOLIDAY |
| WORKER C | ANNUAL HOLIDAY | SPECIAL HOLIDAY | PUBLIC HOLIDAY | 12 | 11 | 15 | – | SPECIAL HOLIDAY | 10 | 17 | – | SPECIAL HOLIDAY | 42 | – | PUBLIC HOLIDAY | 16 | – | 13 | – | SPECIAL HOLIDAY |
| WORKER D | SPECIAL HOLIDAY | 26 | – | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 | – | 13 | – |
| WORKER E | PUBLIC HOLIDAY | 13 | – | SPECIAL HOLIDAY | PUBLIC HOLIDAY | 12 | 11 | 41 | ANNUAL HOLIDAY | SPECIAL HOLIDAY | PUBLIC HOLIDAY | 42 | – | 14 | – | SPECIAL HOLIDAY | 20 | 16 | – | SPECIAL HOLIDAY |
| WORKER F | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 22 | 21 | SPECIAL HOLIDAY |
| WORKER G | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 |
| WORKER H | SPECIAL HOLIDAY | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 42 |
| WORKER I | ANNUAL HOLIDAY | SPECIAL HOLIDAY | PUBLIC HOLIDAY | ANNUAL HOLIDAY | PUBLIC HOLIDAY | 14 | – | 10 | SPECIAL HOLIDAY | 12 | 11 | 15 | – | SPECIAL HOLIDAY | PUBLIC HOLIDAY | 17 | – | 14 | – | SPECIAL HOLIDAY |
| WORKER J | 14 | – | SPECIAL HOLIDAY | PUBLIC HOLIDAY | 16 | – | | | | | 2 | 11 | 15 | – | SPECIAL HOLIDAY | PUBLIC HOLIDAY | 17 | – | 14 | – |
| WORKER K | 31 | 10 | ANNUAL HOLIDAY | SPECIAL HOLIDAY | PUBLIC HOLIDAY | 16 | | | | | | 12 | 11 | PUBLIC HOLIDAY | 20 | TROUBLE 42 | – | PUBLIC HOLIDAY | ANNUAL HOLIDAY | 14 |
| WORKER L | 17 | – | SPECIAL HOLIDAY | PUBLIC HOLIDAY | 30 | 13 | | | | | 1 | SPECIAL HOLIDAY | 12 | 11 | 15 | – | SPECIAL HOLIDAY | PUBLIC HOLIDAY | ANNUAL HOLIDAY | PUBLIC HOLIDAY |



FIG. 5

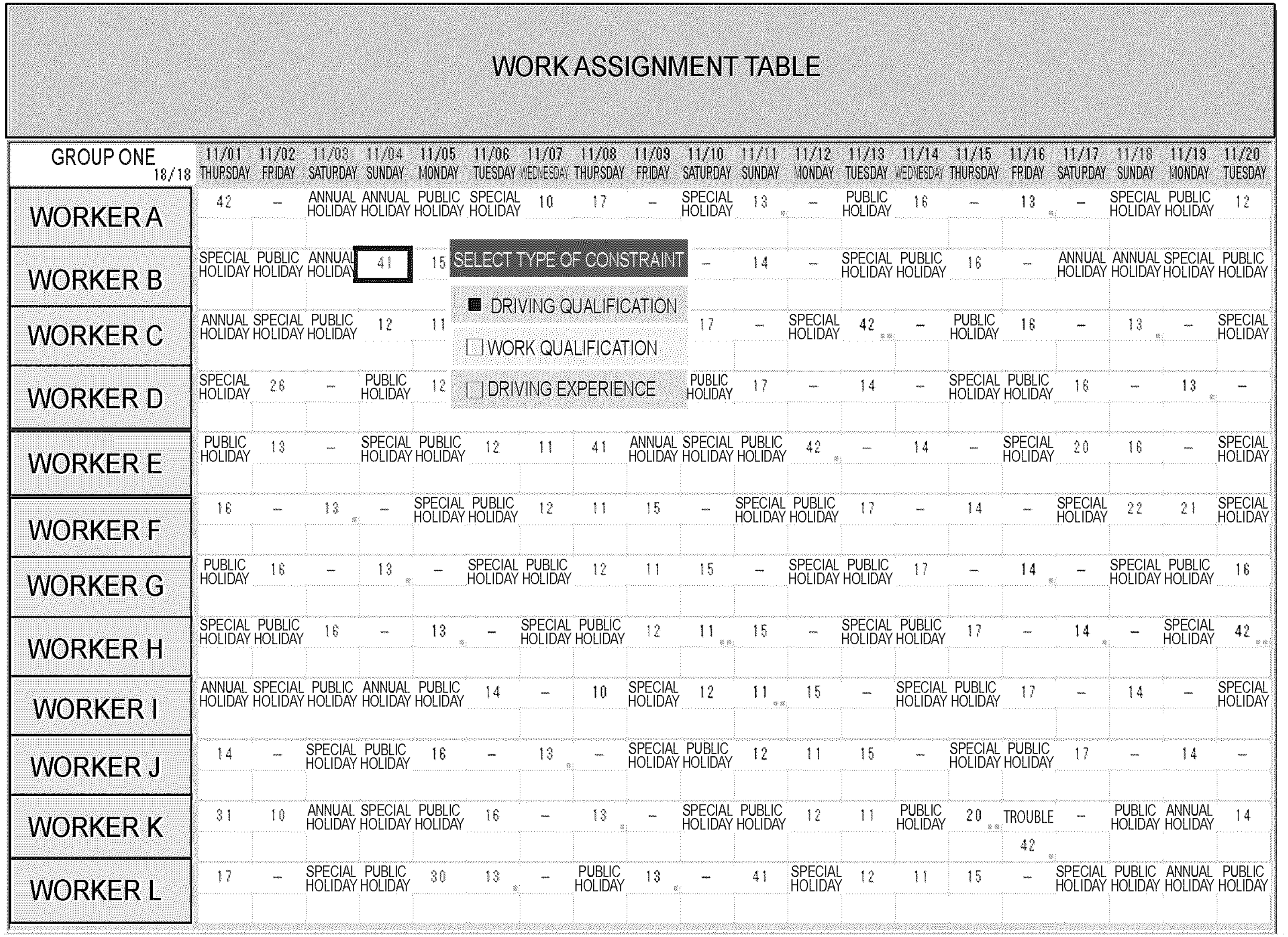
WORK ASSIGNMENT TABLE
GROUP ONE
18/18
11/01 THURSDAY
11/02 FRIDAY
11/03 SATURDAY
11/04 SUNDAY
11/05 MONDAY
11/06 TUESDAY
11/07 WEDNESDAY
11/08 THURSDAY
11/09 FRIDAY
11/10 SATURDAY
11/11 SUNDAY
11/12 MONDAY
11/13 TUESDAY
11/14 WEDNESDAY
11/15 THURSDAY
11/16 FRIDAY
11/17 SATURDAY
11/18 SUNDAY
11/19 MONDAY
11/20 TUESDAY
WORKER A
WORKER B
WORKER C
WORKER D
WORKER E
WORKER F
WORKER G
WORKER H
WORKER I
WORKER J
WORKER K
WORKER L
SELECT TYPE OF CONSTRAINT
DRIVING QUALIFICATION
WORK QUALIFICATION
DRIVING EXPERIENCE

FIG. 6

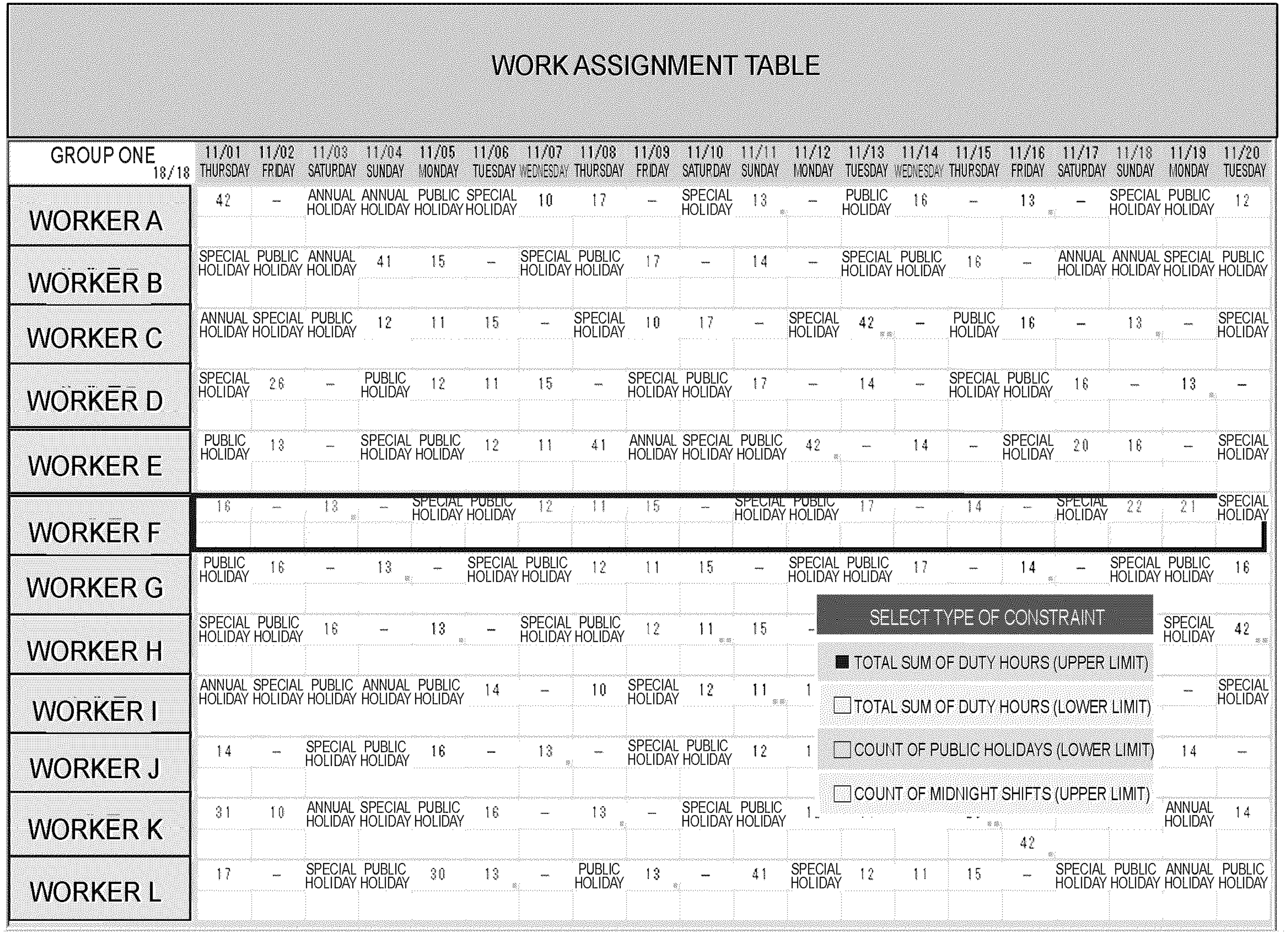
WORK ASSIGNMENT TABLE
GROUP ONE 18/18
11/01 THURSDAY 11/02 FRIDAY 11/03 SATURDAY 11/04 SUNDAY 11/05 MONDAY 11/06 TUESDAY 11/07 WEDNESDAY 11/08 THURSDAY 11/09 FRIDAY 11/10 SATURDAY 11/11 SUNDAY 11/12 MONDAY 11/13 TUESDAY 11/14 WEDNESDAY 11/15 THURSDAY 11/16 FRIDAY 11/17 SATURDAY 11/18 SUNDAY 11/19 MONDAY 11/20 TUESDAY
WORKER A 42 – ANNUAL HOLIDAY ANNUAL HOLIDAY PUBLIC HOLIDAY SPECIAL HOLIDAY 10 17 – SPECIAL HOLIDAY 13 – PUBLIC HOLIDAY 16 – 13 – SPECIAL HOLIDAY PUBLIC HOLIDAY 12
WORKER B SPECIAL HOLIDAY PUBLIC HOLIDAY ANNUAL HOLIDAY 41 15 – SPECIAL HOLIDAY PUBLIC HOLIDAY 17 – 14 – SPECIAL HOLIDAY PUBLIC HOLIDAY 16 – ANNUAL HOLIDAY ANNUAL HOLIDAY SPECIAL HOLIDAY PUBLIC HOLIDAY
WORKER C ANNUAL HOLIDAY SPECIAL HOLIDAY PUBLIC HOLIDAY 12 11 15 – SPECIAL HOLIDAY 10 17 – SPECIAL HOLIDAY 42 – PUBLIC HOLIDAY 16 – 13 – SPECIAL HOLIDAY
WORKER D SPECIAL HOLIDAY 26 – PUBLIC HOLIDAY 12 11 15 – SPECIAL HOLIDAY PUBLIC HOLIDAY 17 – 14 – SPECIAL HOLIDAY PUBLIC HOLIDAY 16 – 13 –
WORKER E PUBLIC HOLIDAY 13 – SPECIAL HOLIDAY PUBLIC HOLIDAY 12 11 41 ANNUAL HOLIDAY SPECIAL HOLIDAY PUBLIC HOLIDAY 42 – 14 – SPECIAL HOLIDAY 20 16 – SPECIAL HOLIDAY
WORKER F 16 – 13 – SPECIAL HOLIDAY PUBLIC HOLIDAY 12 11 15 – SPECIAL HOLIDAY PUBLIC HOLIDAY 17 – 14 – SPECIAL HOLIDAY 22 21 SPECIAL HOLIDAY
WORKER G PUBLIC HOLIDAY 16 – 13 – SPECIAL HOLIDAY PUBLIC HOLIDAY 12 11 15 – SPECIAL HOLIDAY PUBLIC HOLIDAY 17 – 14 – SPECIAL HOLIDAY PUBLIC HOLIDAY 16
WORKER H SPECIAL HOLIDAY PUBLIC HOLIDAY 16 – 13 – SPECIAL HOLIDAY PUBLIC HOLIDAY 12 11 15 SPECIAL HOLIDAY 42
WORKER I ANNUAL HOLIDAY SPECIAL HOLIDAY PUBLIC HOLIDAY ANNUAL HOLIDAY PUBLIC HOLIDAY 14 – 10 SPECIAL HOLIDAY 12 11 – SPECIAL HOLIDAY
WORKER J 14 – SPECIAL HOLIDAY PUBLIC HOLIDAY 16 – 13 – SPECIAL HOLIDAY PUBLIC HOLIDAY 12 14 –
WORKER K 31 10 ANNUAL HOLIDAY SPECIAL HOLIDAY PUBLIC HOLIDAY 16 – 13 – SPECIAL HOLIDAY PUBLIC HOLIDAY 42 ANNUAL HOLIDAY 14
WORKER L 17 – SPECIAL HOLIDAY PUBLIC HOLIDAY 30 13 – PUBLIC HOLIDAY 13 – 41 SPECIAL HOLIDAY 12 11 15 – SPECIAL HOLIDAY PUBLIC HOLIDAY ANNUAL HOLIDAY PUBLIC HOLIDAY
SELECT TYPE OF CONSTRAINT
TOTAL SUM OF DUTY HOURS (UPPER LIMIT)
TOTAL SUM OF DUTY HOURS (LOWER LIMIT)
COUNT OF PUBLIC HOLIDAYS (LOWER LIMIT)
COUNT OF MIDNIGHT SHIFTS (UPPER LIMIT)

FIG. 7

WORK ASSIGNMENT TABLE

| GROUP ONE 18/18 | 11/01 THURSDAY | 11/02 FRIDAY | 11/03 SATURDAY | 11/04 SUNDAY | 11/05 MONDAY | 11/06 TUESDAY | 11/07 WEDNESDAY | 11/08 THURSDAY | 11/09 FRIDAY | 11/10 SATURDAY | 11/11 SUNDAY | 11/12 MONDAY | 11/13 TUESDAY | 11/14 WEDNESDAY | 11/15 THURSDAY | 11/16 FRIDAY | 11/17 SATURDAY | 11/18 SUNDAY | 11/19 MONDAY | 11/20 TUESDAY |
|---|---|---|---|---|---|---|---|---|---|---|---|---|---|---|---|---|---|---|---|---|
| WORKER A | 42 | – | ANNUAL HOLIDAY | ANNUAL HOLIDAY | PUBLIC HOLIDAY | SPECIAL HOLIDAY | 10 | 17 | – | SPECIAL HOLIDAY | 13 | – | PUBLIC HOLIDAY | 16 | – | 13 | – | SPECIAL HOLIDAY | PUBLIC HOLIDAY | 12 |
| WORKER B | SPECIAL HOLIDAY | PUBLIC HOLIDAY | ANNUAL HOLIDAY | 41 | 15 | – | SPECIAL HOLIDAY | PUBLIC HOLIDAY | 17 | – | 14 | – | SPECIAL HOLIDAY | PUBLIC HOLIDAY | 16 | – | ANNUAL HOLIDAY | ANNUAL HOLIDAY | SPECIAL HOLIDAY | PUBLIC HOLIDAY |
| WORKER C | ANNUAL HOLIDAY | SPECIAL HOLIDAY | PUBLIC HOLIDAY | 12 | 11 | 15 | – | SPECIAL HOLIDAY | 10 | 17 | – | SPECIAL HOLIDAY | 42 | – | PUBLIC HOLIDAY | 16 | – | 13 | – | SPECIAL HOLIDAY |
| WORKER D | SPECIAL HOLIDAY | 26 | – | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 | – | 13 | – |
| WORKER E | PUBLIC HOLIDAY | 13 | – | SPECIAL HOLIDAY | PUBLIC HOLIDAY | 12 | 11 | 41 | ANNUAL HOLIDAY | SPECIAL HOLIDAY | PUBLIC HOLIDAY | 42 | – | 14 | – | SPECIAL HOLIDAY | 20 | 16 | – | SPECIAL HOLIDAY |
| WORKER F | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 22 | 21 | SPECIAL HOLIDAY |
| WORKER G | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 |
| WORKER H | SPECIAL HOLIDAY | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 42 |
| WORKER I | ANNUAL HOLIDAY | SPECIAL HOLIDAY | PUBLIC HOLIDAY | ANNUAL HOLIDAY | PUBLIC HOLIDAY | 14 | – | 10 | SPECIAL HOLIDAY | 12 | 11 | 15 | – | SPECIAL HOLIDAY | PUBLIC HOLIDAY | 17 | – | 14 | – | SPECIAL HOLIDAY |
| WORKER J | 14 | – | SPECIAL HOLIDAY | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – |
| WORKER K | 31 | 10 | ANNUAL HOLIDAY | SPECIAL HOLIDAY | PUBLIC HOLIDAY | 16 | – | 13 | – | SPECIAL HOLIDAY | PUBLIC HOLIDAY | 12 | 11 | PUBLIC HOLIDAY | 20 | TROUBLE 42 | – | PUBLIC HOLIDAY | ANNUAL HOLIDAY | 14 |
| WORKER L | 17 | – | SPECIAL HOLIDAY | PUBLIC HOLIDAY | 30 | 13 | – | PUBLIC HOLIDAY | 13 | – | 41 | SPECIAL HOLIDAY | 12 | 11 | 15 | – | SPECIAL HOLIDAY | PUBLIC HOLIDAY | ANNUAL HOLIDAY | PUBLIC HOLIDAY |

FIG. 8

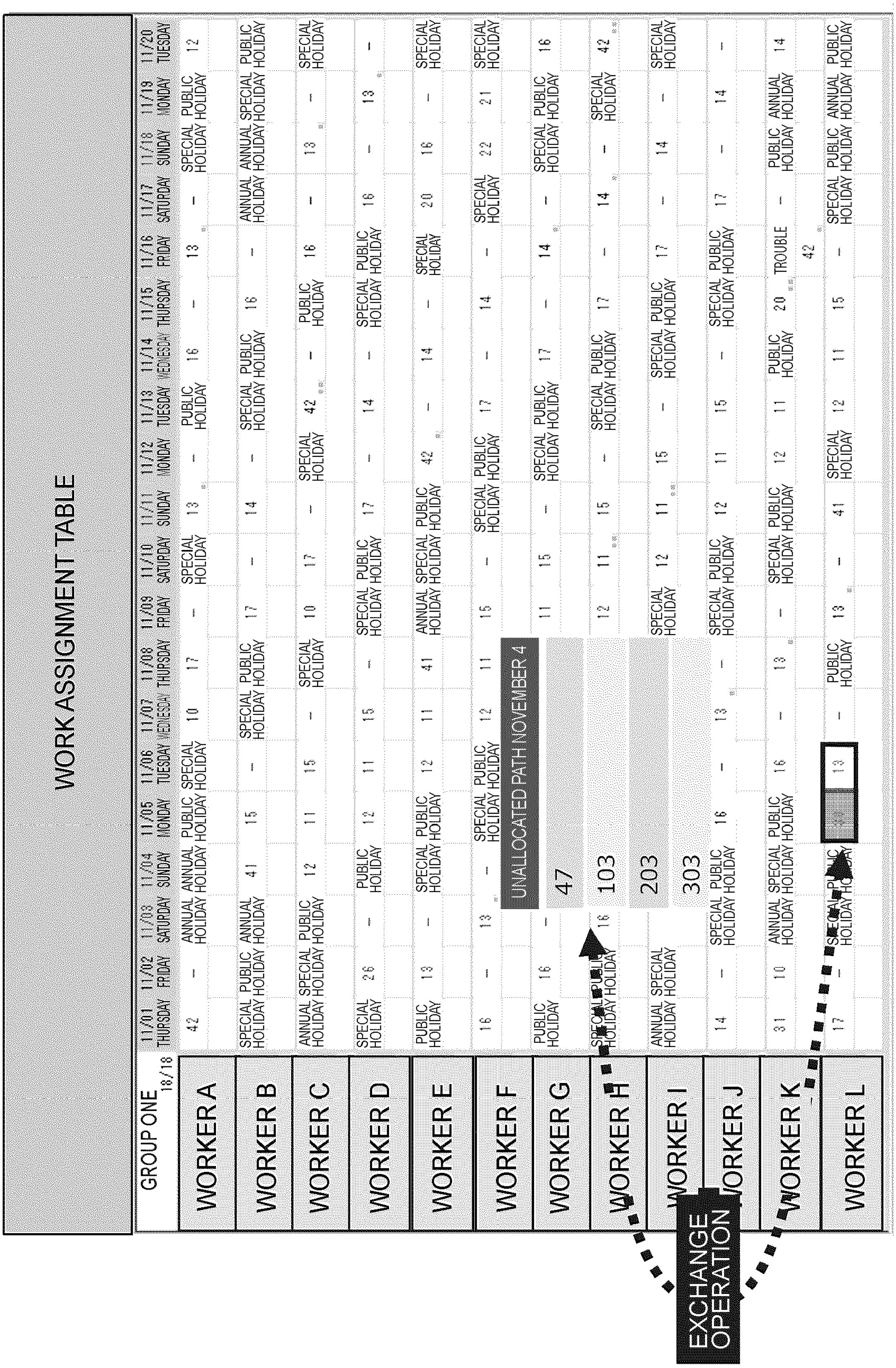
WORK ASSIGNMENT TABLE
GROUP ONE 18/18
WORKER A
WORKER B
WORKER C
WORKER D
WORKER E
WORKER F
WORKER G
WORKER H
WORKER I
WORKER J
WORKER K
WORKER L
UNALLOCATED PATH NOVEMBER 4
47
103
203
303
EXCHANGE OPERATION

FIG. 9

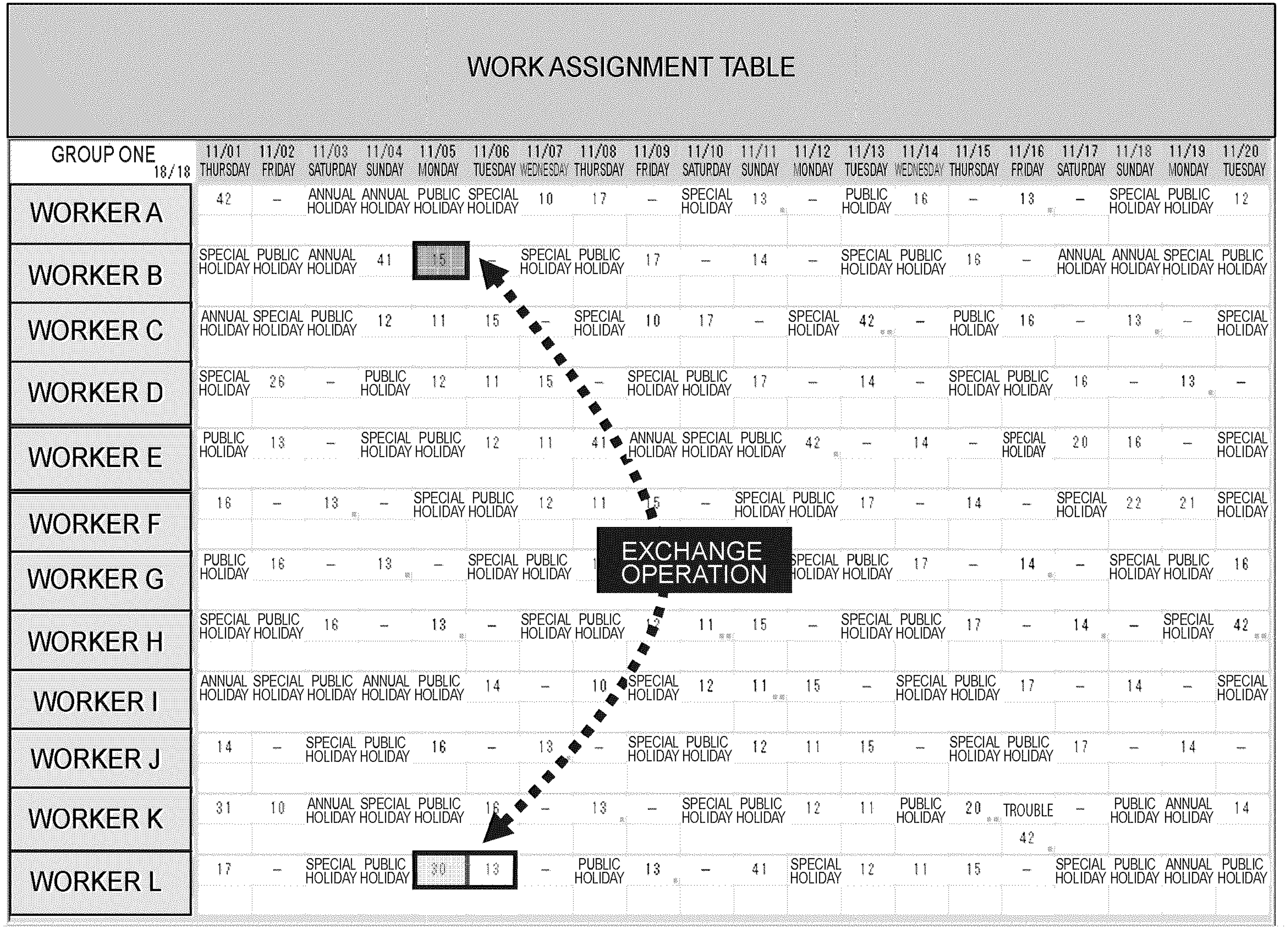


WORK ASSIGNMENT TABLE

| GROUP ONE 18/18 | 11/01 THURSDAY | 11/02 FRIDAY | 11/03 SATURDAY | 11/04 SUNDAY | 11/05 MONDAY | 11/06 TUESDAY | 11/07 WEDNESDAY | 11/08 THURSDAY | 11/09 FRIDAY | 11/10 SATURDAY | 11/11 SUNDAY | 11/12 MONDAY | 11/13 TUESDAY | 11/14 WEDNESDAY | 11/15 THURSDAY | 11/16 FRIDAY | 11/17 SATURDAY | 11/18 SUNDAY | 11/19 MONDAY | 11/20 TUESDAY |
|---|---|---|---|---|---|---|---|---|---|---|---|---|---|---|---|---|---|---|---|---|
| WORKER A | 42 | – | ANNUAL HOLIDAY | ANNUAL HOLIDAY | PUBLIC HOLIDAY | SPECIAL HOLIDAY | 10 | 17 | – | SPECIAL HOLIDAY | 13 | – | PUBLIC HOLIDAY | 16 | – | 13 | – | SPECIAL HOLIDAY | PUBLIC HOLIDAY | 12 |
| WORKER B | SPECIAL HOLIDAY | PUBLIC HOLIDAY | ANNUAL HOLIDAY | 41 | 15 | – | SPECIAL HOLIDAY | PUBLIC HOLIDAY | 17 | – | 14 | – | SPECIAL HOLIDAY | PUBLIC HOLIDAY | 16 | – | ANNUAL HOLIDAY | ANNUAL HOLIDAY | SPECIAL HOLIDAY | PUBLIC HOLIDAY |
| WORKER C | ANNUAL HOLIDAY | SPECIAL HOLIDAY | PUBLIC HOLIDAY | 12 | 11 | 15 | – | SPECIAL HOLIDAY | 10 | 17 | – | SPECIAL HOLIDAY | 42 | – | PUBLIC HOLIDAY | 16 | – | 13 | – | SPECIAL HOLIDAY |
| WORKER D | SPECIAL HOLIDAY | 26 | – | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 | – | 13 | – |
| WORKER E | PUBLIC HOLIDAY | 13 | – | SPECIAL HOLIDAY | PUBLIC HOLIDAY | 12 | 11 | 41 | ANNUAL HOLIDAY | SPECIAL HOLIDAY | PUBLIC HOLIDAY | 42 | – | 14 | – | SPECIAL HOLIDAY | 20 | 16 | – | SPECIAL HOLIDAY |
| WORKER F | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 22 | 21 | SPECIAL HOLIDAY |
| WORKER G | PUBLIC HOLIDAY | 16 | – | 13 | – | SPECIAL HOLIDAY | PUBLIC HOLIDAY | [illegible] | [illegible] | [illegible] | [illegible] | SPECIAL HOLIDAY | PUBLIC HOLIDAY | 17 | – | 14 | – | SPECIAL HOLIDAY | PUBLIC HOLIDAY | 16 |
| WORKER H | SPECIAL HOLIDAY | PUBLIC HOLIDAY | 16 | – | 13 | – | SPECIAL HOLIDAY | PUBLIC HOLIDAY | [illegible] | 11 | 15 | – | SPECIAL HOLIDAY | PUBLIC HOLIDAY | 17 | – | 14 | – | SPECIAL HOLIDAY | 42 |
| WORKER I | ANNUAL HOLIDAY | SPECIAL HOLIDAY | PUBLIC HOLIDAY | ANNUAL HOLIDAY | PUBLIC HOLIDAY | 14 | – | 10 | SPECIAL HOLIDAY | 12 | 11 | 15 | – | SPECIAL HOLIDAY | PUBLIC HOLIDAY | 17 | – | 14 | – | SPECIAL HOLIDAY |
| WORKER J | 14 | – | SPECIAL HOLIDAY | PUBLIC HOLIDAY | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – |
| WORKER K | 31 | 10 | ANNUAL HOLIDAY | SPECIAL HOLIDAY | PUBLIC HOLIDAY | 16 | – | 13 | – | SPECIAL HOLIDAY | PUBLIC HOLIDAY | 12 | 11 | PUBLIC HOLIDAY | 20 | TROUBLE 42 | – | PUBLIC HOLIDAY | ANNUAL HOLIDAY | 14 |
| WORKER L | 17 | – | SPECIAL HOLIDAY | PUBLIC HOLIDAY | 30 | 13 | – | PUBLIC HOLIDAY | 13 | – | 41 | SPECIAL HOLIDAY | 12 | 11 | 15 | – | SPECIAL HOLIDAY | PUBLIC HOLIDAY | ANNUAL HOLIDAY | PUBLIC HOLIDAY |

FIG. 10

## WORK ASSIGNMENT TABLE

| GROUP ONE 18/18 | 11/01 THURSDAY | 11/02 FRIDAY | 11/03 SATURDAY | 11/04 SUNDAY | 11/05 MONDAY | 11/06 TUESDAY | 11/07 WEDNESDAY | 11/08 THURSDAY | 11/09 FRIDAY | 11/10 SATURDAY | 11/11 SUNDAY | 11/12 MONDAY | 11/13 TUESDAY | 11/14 WEDNESDAY | 11/15 THURSDAY | 11/16 FRIDAY | 11/17 SATURDAY | 11/18 SUNDAY | 11/19 MONDAY | 11/20 TUESDAY |
|---|---|---|---|---|---|---|---|---|---|---|---|---|---|---|---|---|---|---|---|---|
| WORKER A | 42 | – | ANNUAL HOLIDAY | ANNUAL HOLIDAY | PUBLIC HOLIDAY | SPECIAL HOLIDAY | 10 | 17 | – | SPECIAL HOLIDAY | 13 | – | PUBLIC HOLIDAY | 16 | – | 13 | – | SPECIAL HOLIDAY | PUBLIC HOLIDAY | 12 |
| WORKER B | SPECIAL HOLIDAY | PUBLIC HOLIDAY | ANNUAL HOLIDAY | 41 | 15 | – | SPECIAL HOLIDAY | PUBLIC HOLIDAY | 17 | – | 14 | – | SPECIAL HOLIDAY | PUBLIC HOLIDAY | 16 | – | ANNUAL HOLIDAY | ANNUAL HOLIDAY | SPECIAL HOLIDAY | PUBLIC HOLIDAY |
| WORKER C | ANNUAL HOLIDAY | SPECIAL HOLIDAY | PUBLIC HOLIDAY | 12 | 11 | 15 | – | SPECIAL HOLIDAY | 10 | 17 | – | SPECIAL HOLIDAY | 42 | – | PUBLIC HOLIDAY | 16 | – | 13 | – | SPECIAL HOLIDAY |
| WORKER D | SPECIAL HOLIDAY | 26 | – | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 | – | 13 | – |
| WORKER E | PUBLIC HOLIDAY | 13 | – | SPECIAL HOLIDAY | PUBLIC HOLIDAY | 12 | 11 | 41 | ANNUAL HOLIDAY | SPECIAL HOLIDAY | PUBLIC HOLIDAY | 42 | – | 14 | – | SPECIAL HOLIDAY | 20 | 16 | – | SPECIAL HOLIDAY |
| WORKER F | 16 | – | 13 | – | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 22 | 21 | SPECIAL HOLIDAY |
| WORKER G | PUBLIC HOLIDAY | UNALLOCATED PATH 11/4 | | | | | PUBLIC HOLIDAY | 12 | 11 | 15 | – | SPECIAL HOLIDAY | PUBLIC HOLIDAY | 17 | – | 14 | – | SPECIAL HOLIDAY | PUBLIC HOLIDAY | 16 |
| WORKER H | SPECIAL HOLIDAY | 30<br>103 | | | | | SPECIAL HOLIDAY | PUBLIC HOLIDAY | 12 | 11 | 15 | – | SPECIAL HOLIDAY | PUBLIC HOLIDAY | 17 | – | 14 | – | SPECIAL HOLIDAY | 42 |
| WORKER I | ANNUAL HOLIDAY | 203 | | | | | – | 10 | SPECIAL HOLIDAY | 12 | 11 | 15 | – | SPECIAL HOLIDAY | PUBLIC HOLIDAY | 17 | – | 14 | – | SPECIAL HOLIDAY |
| WORKER J | 14 | 303 | | | | | 13 | – | SPECIAL HOLIDAY | PUBLIC HOLIDAY | 12 | 11 | 15 | – | SPECIAL HOLIDAY | PUBLIC HOLIDAY | 17 | – | 14 | – |
| WORKER K | 31 | 10 | ANNUAL HOLIDAY | SPECIAL HOLIDAY | PUBLIC HOLIDAY | 16 | – | 13 | – | SPECIAL HOLIDAY | PUBLIC HOLIDAY | 12 | 11 | PUBLIC HOLIDAY | 20 | TROUBLE<br>42 | – | PUBLIC HOLIDAY | ANNUAL HOLIDAY | 14 |
| WORKER L | 17 | – | SPECIAL HOLIDAY | PUBLIC HOLIDAY | 47 | 13 | – | PUBLIC HOLIDAY | 13 | – | 41 | SPECIAL HOLIDAY | 12 | 11 | 15 | – | SPECIAL HOLIDAY | PUBLIC HOLIDAY | ANNUAL HOLIDAY | PUBLIC HOLIDAY |

FIG. 11

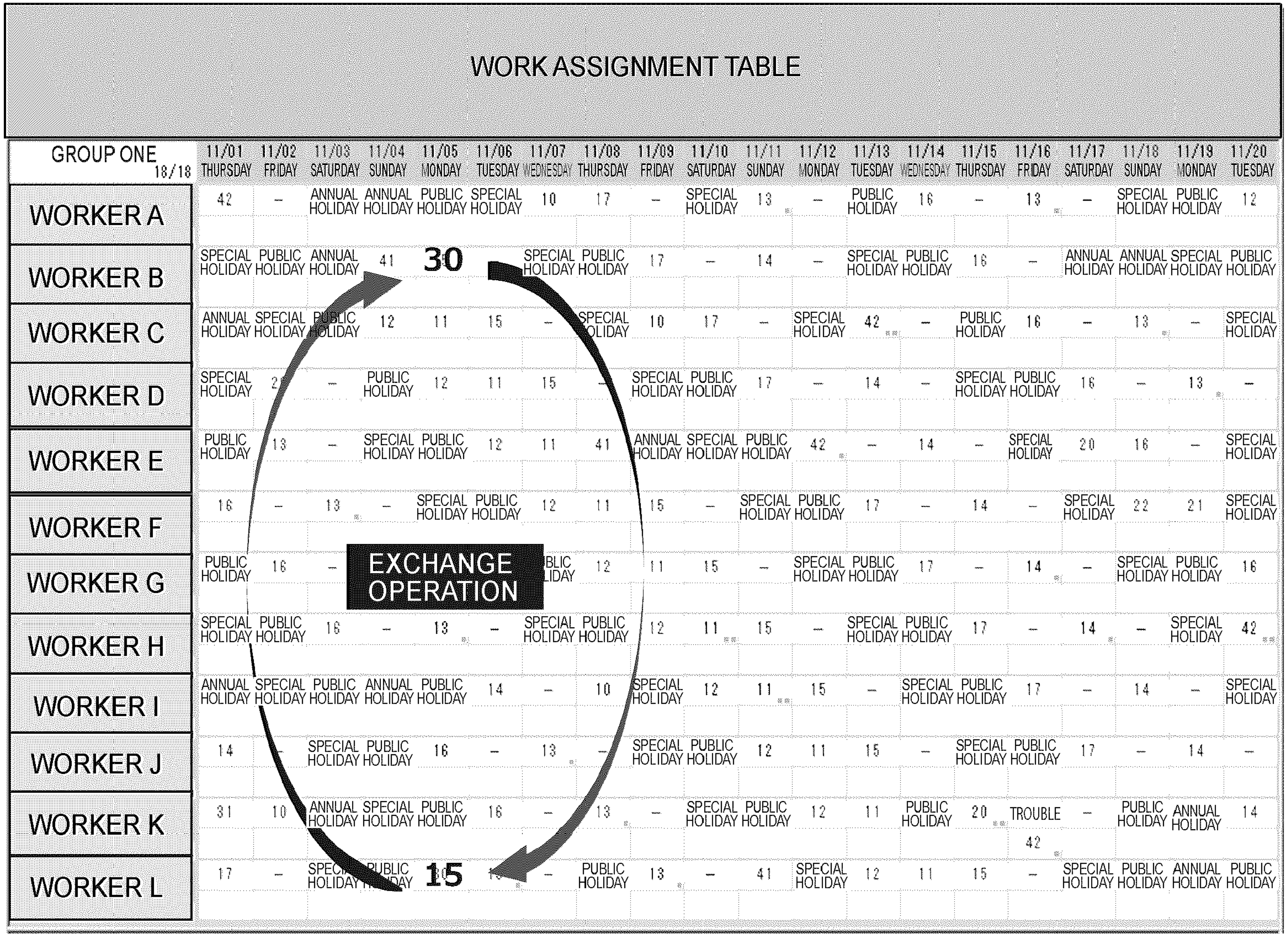
WORK ASSIGNMENT TABLE
GROUP ONE 18/18
11/01 THURSDAY
11/02 FRIDAY
11/03 SATURDAY
11/04 SUNDAY
11/05 MONDAY
11/06 TUESDAY
11/07 WEDNESDAY
11/08 THURSDAY
11/09 FRIDAY
11/10 SATURDAY
11/11 SUNDAY
11/12 MONDAY
11/13 TUESDAY
11/14 WEDNESDAY
11/15 THURSDAY
11/16 FRIDAY
11/17 SATURDAY
11/18 SUNDAY
11/19 MONDAY
11/20 TUESDAY
WORKER A
WORKER B
WORKER C
WORKER D
WORKER E
WORKER F
WORKER G
WORKER H
WORKER I
WORKER J
WORKER K
WORKER L
30
15
EXCHANGE OPERATION
TROUBLE

FIG. 12

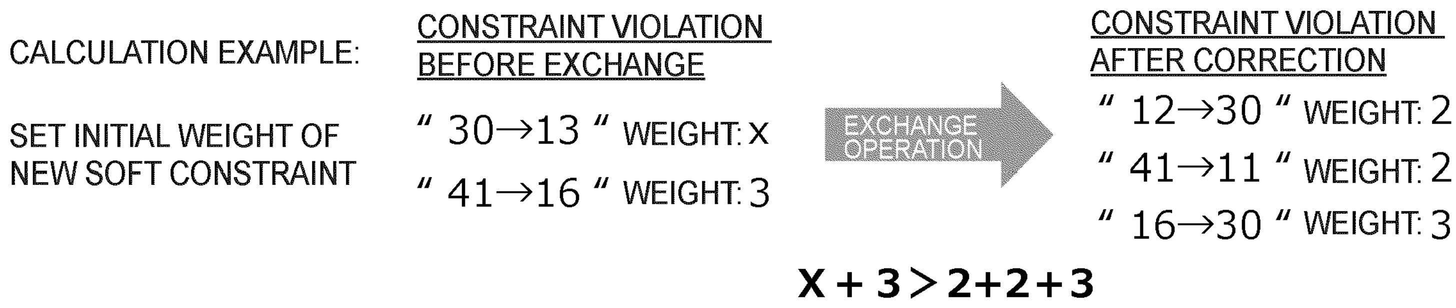
CALCULATION EXAMPLE:
SET INITIAL WEIGHT OF NEW SOFT CONSTRAINT
CONSTRAINT VIOLATION BEFORE EXCHANGE
“ 30→13 “ WEIGHT: X
“ 41→16 “ WEIGHT: 3
EXCHANGE OPERATION
CONSTRAINT VIOLATION AFTER CORRECTION
“ 12→30 “ WEIGHT: 2
“ 41→11 “ WEIGHT: 2
“ 16→30 “ WEIGHT: 3
X + 3 > 2+2+3

FIG. 13A

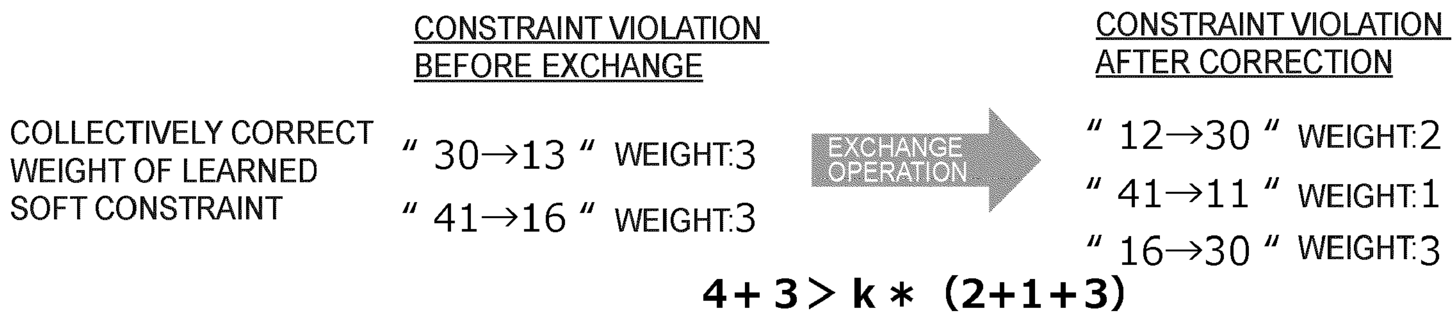
COLLECTIVELY CORRECT WEIGHT OF LEARNED SOFT CONSTRAINT
CONSTRAINT VIOLATION BEFORE EXCHANGE
" 30→13 " WEIGHT:3
" 41→16 " WEIGHT:3
EXCHANGE OPERATION
CONSTRAINT VIOLATION AFTER CORRECTION
" 12→30 " WEIGHT:2
" 41→11 " WEIGHT:1
" 16→30 " WEIGHT:3
4+3 > k * (2+1+3)

FIG. 13B

| | 2/1 | 2/2 | 2/3 | 2/4 | 2/5 | 2/6 | 2/7 | 2/8 |
|---|---|---|---|---|---|---|---|---|
| CREW MEMBER 1 | PATH 1 | PATH 5 | PATH 3 | PUBLIC HOLIDAY | PATH 4 | PATH 2 | PATH 6 | PATH 7 |
| CREW MEMBER 2 | PATH 7 | PATH 1 | PATH 2 | PATH 3 | PUBLIC HOLIDAY | PATH 4 | PATH 5 | PATH 6 |
| CREW MEMBER 3 | PATH 6 | PATH 7 | PATH 1 | PATH 2 | PATH 3 | PUBLIC HOLIDAY | PATH 4 | PATH 5 |
| ⋮ | ⋮ | ⋮ | ⋮ | ⋮ | ⋮ | ⋮ | ⋮ | ⋮ |
| CREW MEMBER 8 | PATH 2 | PATH 3 | PUBLIC HOLIDAY | PATH 4 | PATH 5 | PATH 6 | PATH 7 | PATH 1 |

FIG. 14A

| | 2/1 | 2/2 | 2/3 | 2/4 | 2/5 | 2/6 | 2/7 | 2/8 |
|---|---|---|---|---|---|---|---|---|
| CREW MEMBER 1 | PATH 1 | PATH 5 | PATH 3 | PUBLIC HOLIDAY | PATH 4 | PATH 2 | PATH 6 | PATH 7 |
| CREW MEMBER 2 | PATH 7 | PATH 1 | PATH 2 | PATH 3 | PUBLIC HOLIDAY | PATH 4 | PATH 5 | PATH 6 |
| CREW MEMBER 3 | PATH 6 | PATH 7 | PATH 1 | PATH 2 | PATH 3 | PUBLIC HOLIDAY | PATH 4 | PATH 5 |
| ⋮ | ⋮ | ⋮ | ⋮ | ⋮ | ⋮ | ⋮ | ⋮ | ⋮ |
| CREW MEMBER 8 | PATH 2 | PATH 4 | PUBLIC HOLIDAY | PATH6 | PATH 5 | PATH 3 | PATH 7 | PATH 1 |

FIG. 14B

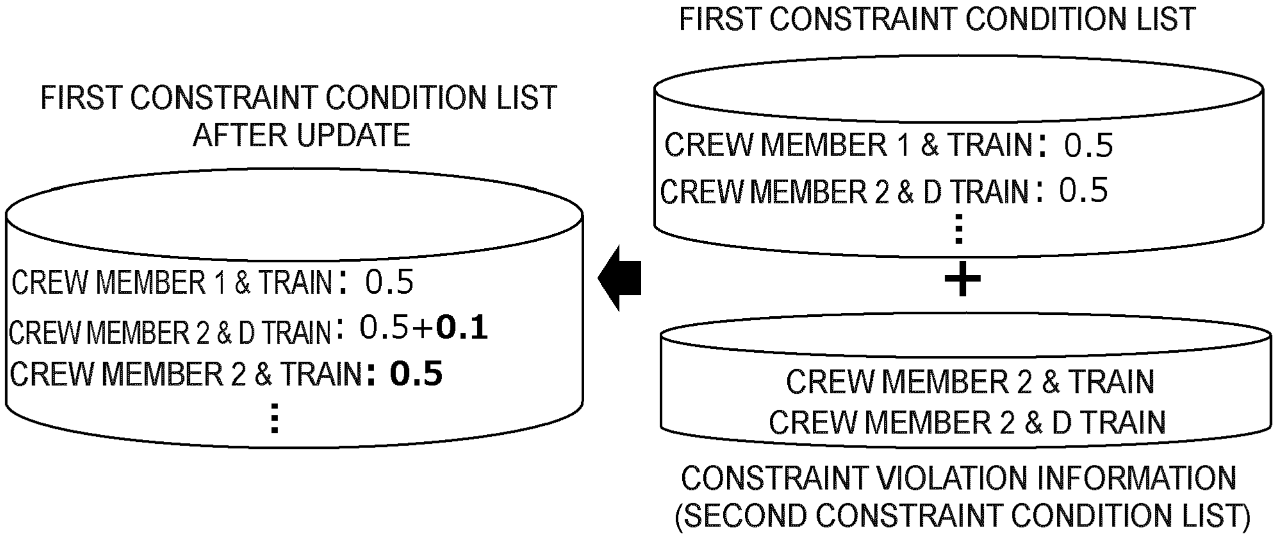
FIRST CONSTRAINT CONDITION LIST
CREW MEMBER 1 & TRAIN: 0.5
CREW MEMBER 2 & D TRAIN: 0.5
⋮
+
CREW MEMBER 2 & TRAIN
CREW MEMBER 2 & D TRAIN
CONSTRAINT VIOLATION INFORMATION (SECOND CONSTRAINT CONDITION LIST)
FIRST CONSTRAINT CONDITION LIST AFTER UPDATE
CREW MEMBER 1 & TRAIN: 0.5
CREW MEMBER 2 & D TRAIN: 0.5+0.1
CREW MEMBER 2 & TRAIN: 0.5
⋮

FIG. 15

| | 2/1 | 2/2 | 2/3 | 2/4 | 2/5 | 2/6 | 2/7 | 2/8 |
|---|---|---|---|---|---|---|---|---|
| CREW MEMBER 1 | PATH1 VEHICLE TYPE: ELECTRIC TRAIN | PATH 5 VEHICLE TYPE: ELECTRIC TRAIN | PATH VEHICLE TYPE: ELECTRIC TRAIN | PUBLIC HOLIDAY VEHICLE TYPE: D TRAIN | PATH4 VEHICLE TYPE: ELECTRIC TRAIN | PATH 2 VEHICLE TYPE: ELECTRIC TRAIN | PATH 6 VEHICLE TYPE: D TRAIN | PATH 7 VEHICLE TYPE: ELECTRIC TRAIN |
| CREW MEMBER 2 | PATH VEHICLE TYPE: ELECTRIC TRAIN | PATH VEHICLE TYPE: ELECTRIC TRAIN | PATH VEHICLE TYPE: ELECTRIC TRAIN | PATH 3 VEHICLE TYPE: TRAIN | PUBLIC HOLIDAY VEHICLE TYPE: ELECTRIC TRAIN | PATH 4 VEHICLE TYPE: ELECTRIC TRAIN | PATH 5 VEHICLE TYPE: D TRAIN | PATH VEHICLE TYPE: ELECTRIC TRAIN |
| ⋮ | ⋮ | ⋮ | ⋮ | ⋮ | ⋮ | ⋮ | ⋮ | ⋮ |
| CREW MEMBER 8 | PATH 2 | PATH 3 | PUBLIC HOLIDAY | PATH 4 | PATH5 | PATH6 | PATH7 | PATH 1 |

FIG. 16A

| | 2/1 | 2/2 | 2/3 | 2/4 | 2/5 | 2/6 | 2/7 | 2/8 |
|---|---|---|---|---|---|---|---|---|
| CREW MEMBER 1 | PATH1 DUTY HOURS : 8H | PATH 5 DUTY HOURS : 6H | PATH 3 DUTY HOURS : 7H | PUBLIC HOLIDAY DUTY HOURS : 8H | PATH4 DUTY HOURS : 8H | PATH2 DUTY HOURS : 9H | PATH 6 DUTY HOURS : 7H | PATH 7 DUTY HOURS : 8H |
| CREW MEMBER 2 | PATH7 VEHICLE TYPE: ELECTRIC TRAIN | PATH 1 VEHICLE TYPE: ELECTRIC TRAIN | PATH 2 VEHICLE TYPE: ELECTRIC TRAIN | PATH 3 VEHICLE TYPE: TRAIN | PUBLIC HOLIDAY VEHICLE TYPE: ELECTRIC TRAIN | PATH 4 VEHICLE TYPE: ELECTRIC TRAIN | PATH 5 VEHICLE TYPE: D TRAIN | PATH 6 VEHICLE TYPE: ELECTRIC TRAIN |
| ⋮ | ⋮ | ⋮ | ⋮ | ⋮ | ⋮ | ⋮ | ⋮ | ⋮ |
| CREW MEMBER 8 | PATH 2 | PATH 3 | PUBLIC HOLIDAY | PATH 4 | PATH5 | PATH6 | PATH 7 | PATH 1 |

FIG. 16B

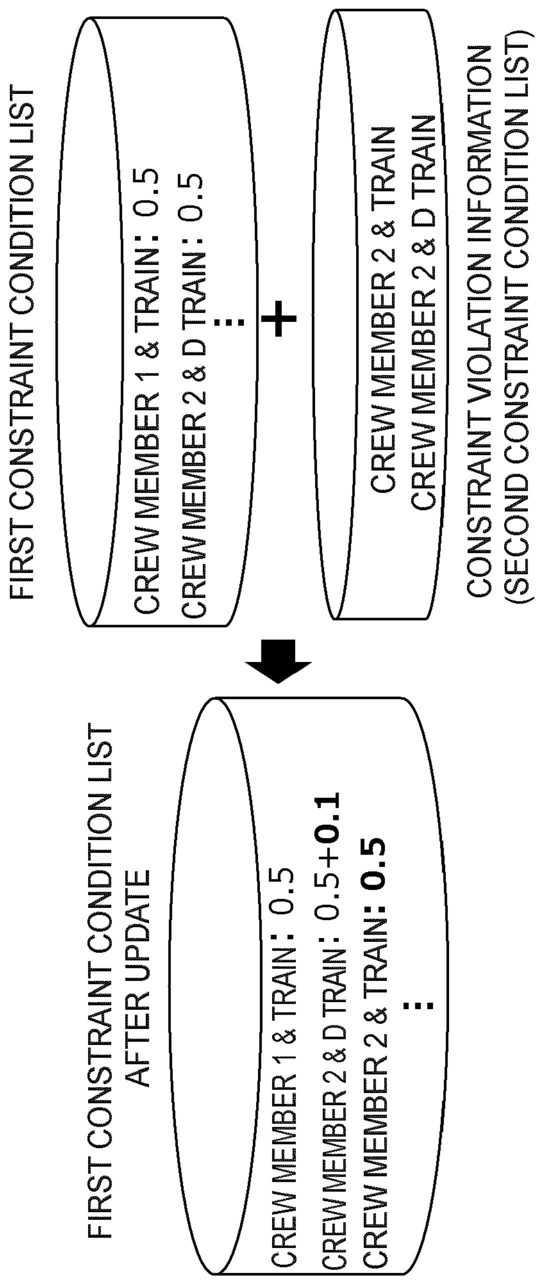
FIRST CONSTRAINT CONDITION LIST
CREW MEMBER 1 & TRAIN : 0.5
CREW MEMBER 2 & D TRAIN : 0.5
⋮
+
CREW MEMBER 2 & TRAIN
CREW MEMBER 2 & D TRAIN
CONSTRAINT VIOLATION INFORMATION
(SECOND CONSTRAINT CONDITION LIST)
FIRST CONSTRAINT CONDITION LIST
AFTER UPDATE
CREW MEMBER 1 & TRAIN : 0.5
CREW MEMBER 2 & D TRAIN : 0.5+0.1
CREW MEMBER 2 & TRAIN : 0.5
⋮

FIG. 17

| | 2/1 | 2/2 | 2/3 | 2/4 | 2/5 | 2/6 | 2/7 | 2/8 |
|---|---|---|---|---|---|---|---|---|
| CREW MEMBER 1 | PATH1 DUTY HOURS: 8H | PATH 5 DUTY HOURS: 6H | PATH 3 DUTY HOURS: 7H | PUBLIC HOLIDAY DUTY HOURS : 0H | PATH4 DUTY HOURS : 8H | PATH 2 DUTY HOURS: 9H | PATH 6 DUTY HOURS: 7H | PATH 7 DUTY HOURS : 8H |
| CREW MEMBER 2 | PATH7 DUTY HOURS: 8H | PATH11 DUTY HOURS: 9H | PATH 2 DUTY HOURS: 9H | PATH 3 DUTY HOURS : 7H | PUBLIC HOLIDAY DUTY HOURS : 0H | PATH14 DUTY HOURS: 10H | PATH 5 DUTY HOURS: 6H | PATH 6 DUTY HOURS : 7H |
| ⋮ | ⋮ | ⋮ | ⋮ | ⋮ | ⋮ | ⋮ | ⋮ | ⋮ |
| CREW MEMBER 8 | PATH 2 | PATH 3 | PUBLIC HOLIDAY | PATH 4 | PATH 5 | PATH 6 | PATH 7 | PATH 1 |

FIG. 18A

| | 2/1 | 2/2 | 2/3 | 2/4 | 2/5 | 2/6 | 2/7 | 2/8 |
|---|---|---|---|---|---|---|---|---|
| CREW MEMBER 1 | PATH1 DUTY HOURS: 8H | PATH 5 DUTY HOURS: 6H | PATH 3 DUTY HOURS: 7H | PUBLIC HOLIDAY DUTY HOURS : 0H | PATH4 DUTY HOURS : 8H | PATH 2 DUTY HOURS: 9H | PATH 6 DUTY HOURS: 7H | PATH 7 DUTY HOURS : 8H |
| CREW MEMBER 2 | PATH7 DUTY HOURS: 8H | PATH 11 DUTY HOURS: 9H | PATH 2 DUTY HOURS: 9H | PATH 3 DUTY HOURS : 7H | PUBLIC HOLIDAY DUTY HOURS : 0H | PATH14 DUTY HOURS: 10H | PATH 5 DUTY HOURS: 6H | PATH 6 DUTY HOURS : 7H |
| ⋮ | ⋮ | ⋮ | ⋮ | ⋮ | ⋮ | ⋮ | ⋮ | ⋮ |
| CREW MEMBER 8 | PATH 2 | PATH 3 | PUBLIC HOLIDAY | PATH 4 | PATH 5 | PATH 6 | PATH 7 | PATH 1 |

FIG. 18B

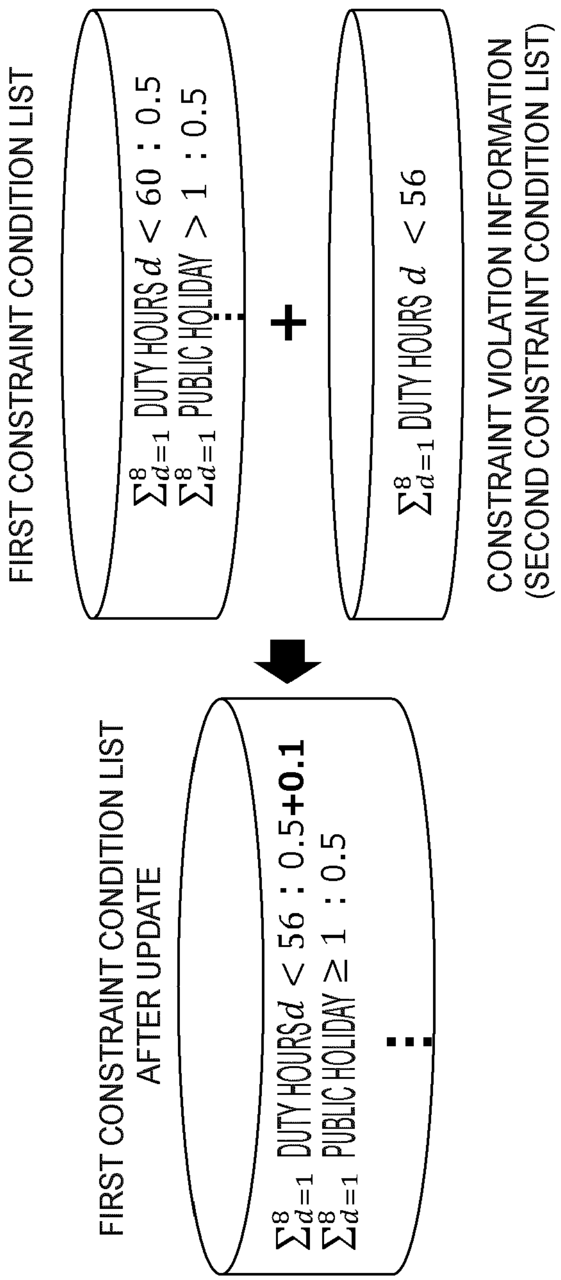
FIRST CONSTRAINT CONDITION LIST
$\sum_{d=1}^{8}$ DUTY HOURS $d$ < 60 : 0.5
$\sum_{d=1}^{8}$ PUBLIC HOLIDAY > 1 : 0.5
⋮
+
$\sum_{d=1}^{8}$ DUTY HOURS $d$ < 56
CONSTRAINT VIOLATION INFORMATION
(SECOND CONSTRAINT CONDITION LIST)
FIRST CONSTRAINT CONDITION LIST
AFTER UPDATE
$\sum_{d=1}^{8}$ DUTY HOURS $d$ < 56 : 0.5**+0.1**
$\sum_{d=1}^{8}$ PUBLIC HOLIDAY ≥ 1 : 0.5
⋮

FIG. 19

| | 2/1 | 2/2 | 2/3 | 2/4 | 2/5 | 2/6 | 2/7 | 2/8 |
|---|---|---|---|---|---|---|---|---|
| CREW MEMBER 1 | PATH 1 MIDNIGHT | PATH 5 EARLY MORNING | PATH 3 DAY DUTY | PUBLIC HOLIDAY HOLIDAY | PATH 4 DAY DUTY | PATH 2 DAY DUTY | PATH 6 DAY DUTY | PATH 7 MIDNIGHT |
| CREW MEMBER 2 | PATH 7 MIDNIGHT | PATH 1 MIDNIGHT | PATH 2 DAY DUTY | PATH 3 DAY DUTY | PUBLIC HOLIDAY HOLIDAY | PATH 14 MIDNIGHT | PATH 5 EARLY MORNING | PATH 6 DAY DUTY |
| ... | ... | ... | ... | ... | ... | ... | ... | ... |
| CREW MEMBER 8 | PATH 2 | PATH 3 | PUBLIC HOLIDAY | PATH 4 | PATH 5 | PATH 6 | PATH 7 | PATH 1 |

FIG. 20A

| | 2/1 | 2/2 | 2/3 | 2/4 | 2/5 | 2/6 | 2/7 | 2/8 |
|---|---|---|---|---|---|---|---|---|
| CREW MEMBER 1 | PATH 1 MIDNIGHT | PATH 5 EARLY MORNING | PATH 3 DAY DUTY | PUBLIC HOLIDAY HOLIDAY | PATH 4 DAY DUTY | PATH 2 DAY DUTY | PATH 6 DAY DUTY | PATH 7 MIDNIGHT |
| CREW MEMBER 2 | PATH 7 MIDNIGHT | PATH 1 MIDNIGHT | PATH 2 DAY DUTY | PATH 3 DAY DUTY | PUBLIC HOLIDAY HOLIDAY | PATH 14 MIDNIGHT | PATH 5 EARLY MORNING | PATH 6 DAY DUTY |
| ⋮ | ⋮ | ⋮ | ⋮ | ⋮ | ⋮ | ⋮ | ⋮ | ⋮ |
| CREW MEMBER 8 | PATH 2 | PATH3 | PUBLIC HOLIDAY | PATH 4 | PATH 5 | PATH 6 | PATH 7 | PATH 1 |

FIG. 20B

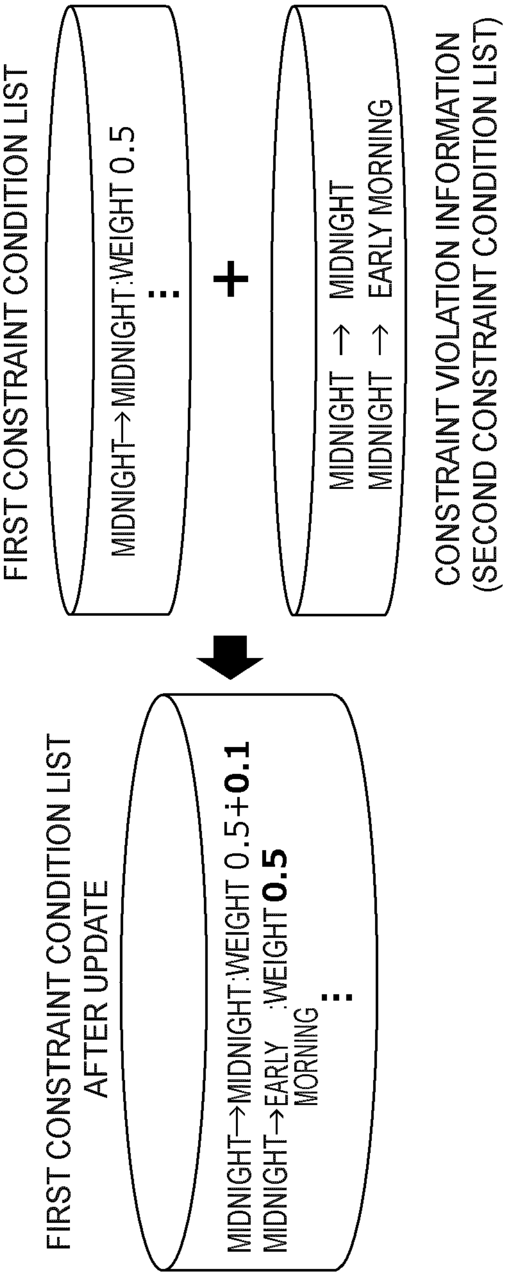
FIRST CONSTRAINT CONDITION LIST
MIDNIGHT→MIDNIGHT:WEIGHT 0.5
⋮
+
MIDNIGHT → MIDNIGHT
MIDNIGHT → EARLY MORNING
CONSTRAINT VIOLATION INFORMATION
(SECOND CONSTRAINT CONDITION LIST)
FIRST CONSTRAINT CONDITION LIST
AFTER UPDATE
MIDNIGHT→MIDNIGHT:WEIGHT 0.5+0.1
MIDNIGHT→EARLY MORNING :WEIGHT 0.5
⋮

FIG. 21

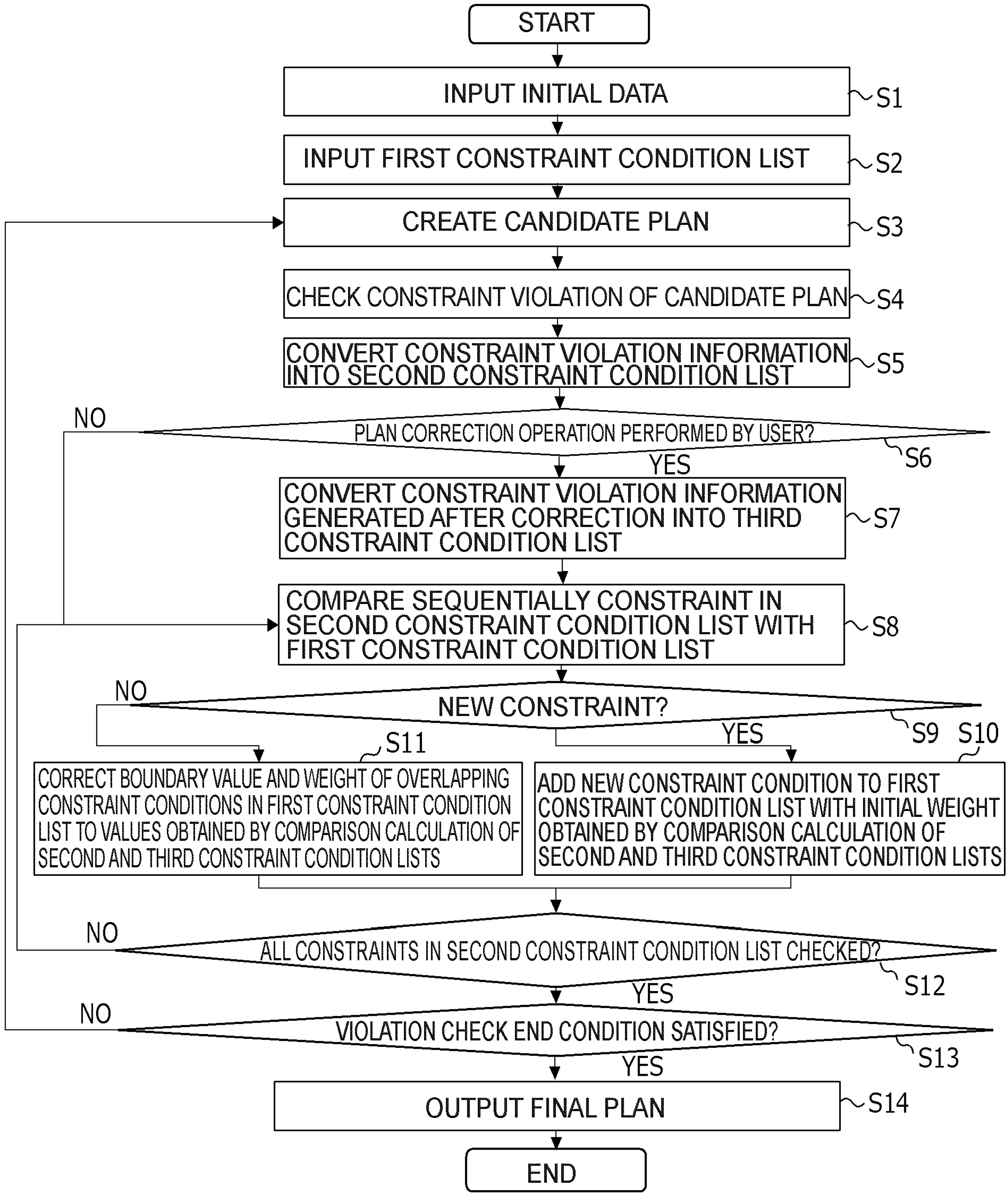
START
INPUT INITIAL DATA
S1
INPUT FIRST CONSTRAINT CONDITION LIST
S2
CREATE CANDIDATE PLAN
S3
CHECK CONSTRAINT VIOLATION OF CANDIDATE PLAN
S4
CONVERT CONSTRAINT VIOLATION INFORMATION INTO SECOND CONSTRAINT CONDITION LIST
S5
NO
PLAN CORRECTION OPERATION PERFORMED BY USER?
S6
YES
CONVERT CONSTRAINT VIOLATION INFORMATION GENERATED AFTER CORRECTION INTO THIRD CONSTRAINT CONDITION LIST
S7
COMPARE SEQUENTIALLY CONSTRAINT IN SECOND CONSTRAINT CONDITION LIST WITH FIRST CONSTRAINT CONDITION LIST
S8
NO
NEW CONSTRAINT?
S9
YES
S11
S10
CORRECT BOUNDARY VALUE AND WEIGHT OF OVERLAPPING CONSTRAINT CONDITIONS IN FIRST CONSTRAINT CONDITION LIST TO VALUES OBTAINED BY COMPARISON CALCULATION OF SECOND AND THIRD CONSTRAINT CONDITION LISTS
ADD NEW CONSTRAINT CONDITION TO FIRST CONSTRAINT CONDITION LIST WITH INITIAL WEIGHT OBTAINED BY COMPARISON CALCULATION OF SECOND AND THIRD CONSTRAINT CONDITION LISTS
NO
ALL CONSTRAINTS IN SECOND CONSTRAINT CONDITION LIST CHECKED?
S12
YES
NO
VIOLATION CHECK END CONDITION SATISFIED?
S13
YES
OUTPUT FINAL PLAN
S14
END

FIG. 22

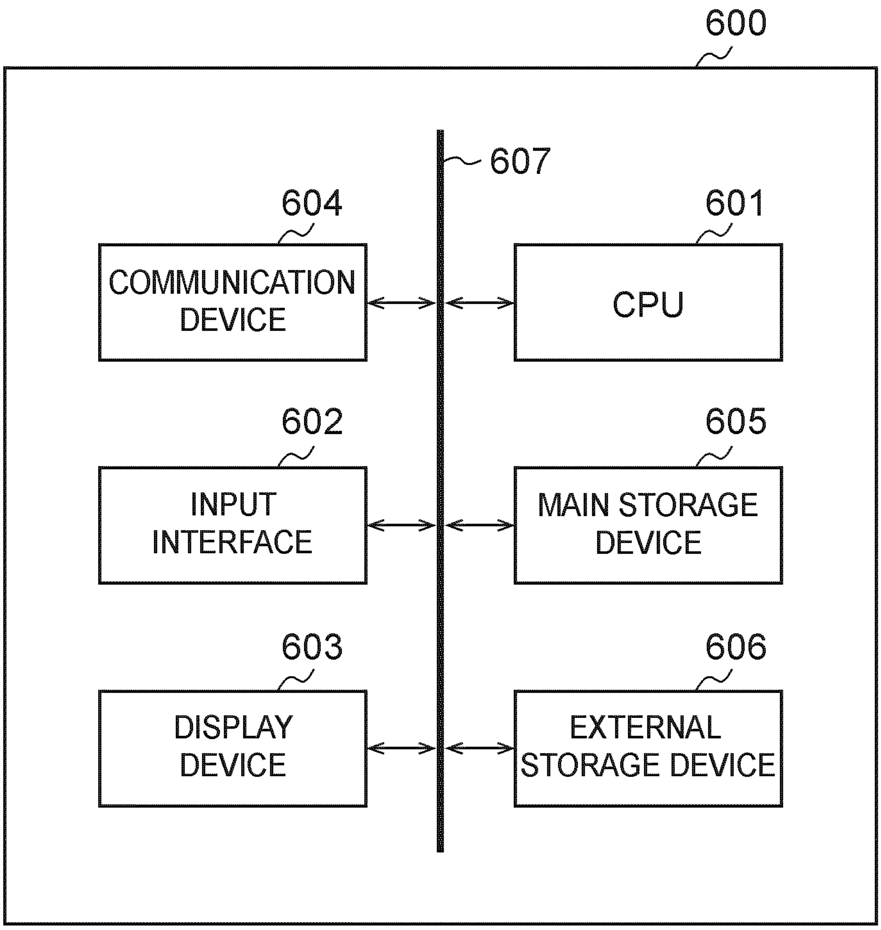
600
607
604
COMMUNICATION DEVICE
601
CPU
602
INPUT INTERFACE
605
MAIN STORAGE DEVICE
603
DISPLAY DEVICE
606
EXTERNAL STORAGE DEVICE

FIG. 23

Europäisches Patentamt
European Patent Office
Office européen des brevets

# EUROPEAN SEARCH REPORT

Application Number
EP 22 15 9942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 216 109 B1 (ZWEBEN MONTE [US] ET AL) 10 April 2001 (2001-04-10)<br>* abstract *<br>* column 8, line 55 - column 9, line 4 *<br>* column 10, line 49 - column 11, line 12 *<br>* column 11, line 13 - column 12, line 58 *<br>* column 17, line 5 - line 36 *<br>* column 24, line 11 - line 35 *<br>----- | 1-15 | INV.<br>G06Q10/06 |
| | | | TECHNICAL FIELDS SEARCHED (IPC) |
| | | | G06Q |

The present search report has been drawn up for all claims

1

| Place of search | Date of completion of the search | Examiner |
|---|---|---|
| Munich | 4 August 2022 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 15 9942

This annex lists the patent family members relating to the patent documents cited in the above-mentioned European search report. The members are as contained in the European Patent Office EDP file on
The European Patent Office is in no way liable for these particulars which are merely given for the purpose of information.

04-08-2022

| Patent document cited in search report | Publication date | Patent family member(s) | Publication date |
|---|---|---|---|
| US 6216109 B1 | 10-04-2001 | NONE | |

EPO FORM P0459

For more details about this annex : see Official Journal of the European Patent Office, No. 12/82